# EUROPEAN PATENT APPLICATION

(11) **EP 4 678 781 A1**
(43) Date of publication of application: **14.01.2026**
(21) Application number: 24767215.7
(22) Date of filing: 07.03.2024
(51) Int. Cl.: C23C 2/06, C22C 18/00, C22C 18/04, C23C 2/26

(54) **PLATED STEEL MATERIAL**

(30) Priority: 07.03.2023 JP 2023034588
(71) Applicant: NIPPON STEEL CORPORATION, Chiyoda-ku Tokyo 100-8071 (JP)
(72) Inventor: ISHII Kotaro, Tokyo 100-8071 (JP); TOKUDA Kohei, Tokyo 100-8071 (JP); GOTO Yasuto, Tokyo 100-8071 (JP); SAITO Mamoru, Tokyo 100-8071 (JP)
(74) Representative: Vossius & Partner Patentanwälte Rechtsanwälte mbB
(86) International application number: PCT/JP2024/008791
(87) International publication number: WO 2024/185849

(57) **Abstract**

This coated steel is a coated steel including: a steel material; and a coating layer provided on a surface of the steel material, in which the coating layer has an average chemical composition including, in terms of mass%, Al: more than 5.0% to 30.0%, Mg: more than 4.0% to 12.5%, B: more than 0.01% to 1.00%, and Zn: more than 60.00%, the coating layer contains, in terms of area fraction of a cross section of the coating layer in a thickness direction in a scanning electron microscope visual field, a MgZn₂ phase: 10% to less than 60%, an Al-Zn phase: 10% to less than 50%, a [ternary eutectic structure of Al/MgZn₂/Zn]: 10% or more, a boride: 0.02 to less than 3.00%, and a remainder in microstructure, and the boride is one or two or more of AlB₂, AlB₁₂, CrB₂, TiB₂, VB₂, and ZrB₂.

## Description

### TECHNICAL FIELD

The present invention relates to a coated steel.

Priority is claimed on Japanese Patent Application No. 2023-034588, filed March 7, 2023, the content of which is incorporated herein by reference.

### BACKGROUND ART

A coated steel including a coating layer formed on a surface of a steel material may be used as a forming parts having various shapes by formation for the intended purpose. **In** transportation of such a forming parts, when the edge portion of the forming parts comes into contact with the surface of a coating layer of another forming parts, a defect that reaches the base material of the steel material may be formed in the coating layer.

Alternatively, the coated steel may be used in, for example, roof materials, wall materials of buildings. Also in this case, for example, in the construction site of a building, when the coated steel comes into contact with a tool or another material, a defect that reaches the base material of the steel may be formed in the coating layer due to the impact at the time of contact.

The defect formed in the coating layer deteriorates the external appearance of the forming parts or the like. In addition, a defect that reaches the base material of the steel is formed in the coating layer, leading to reduced corrosion resistance. Therefore, there is a demand for a coated steel having exceptional defect resistance.

Patent Document 1 discloses a hot-dip Zn-Al-Mg alloy coated steel sheet having a hot-dip Zn-Al-Mg alloy coating layer on the surface of a steel sheet material.

Patent Document 2 discloses a coated steel including a coating layer including a Zn-Al-Mg alloy layer disposed on a surface of the steel material, the Zn-Al-Mg alloy layer having a Zn phase and containing a Mg-Sn intermetallic compound phase in the Zn phase, the coating layer including, in terms of mass%, Zn: more than 65.0%, Al: more than 5.0% to less than 25.0%, Mg: more than 3.0% to less than 12.5%, Sn: 0.1% to 20.0%, and impurities, and having a chemical composition satisfying Bi + In<Sn, Y + La + Ce ≤ Ca, Si < Sn, 0 ≤ Cr + Ti + Ni + Co + V + Nb + Cu + Mn < 0.25, and 0 ≤ Sr + Sb + Pb + B < 0.5.

Patent Document 3 discloses a coated steel including a coating layer disposed on a surface of a steel material and including a Zn-Al-Mg alloy layer, in which in a cross section of the Zn-Al-Mg alloy layer, an area fraction of a MgZn₂ phase is 45 to 75%, an area fraction of a total of the MgZn₂ phase and an Al phase is 70% or more, and an area fraction of a Zn-Al-MgZn₂ ternary eutectic structure is 0 to 5%, the coating layer includes, in mass%, Zn: more than 44.90% to less than 79.90%, Al: more than 15% to less than 35%, Mg: more than 5% to less than 20%, Ca: 0.1% to less than 3.0%, and impurities, and in a case where an element group A is Y, La, and Ce, an element group B is Cr, Ti, Ni, Co, V, Nb, Cu, and Mn, an element group C is Sr, Sb, and Pb, and an element group D is Sn, Bi, and In, the coating layer has a chemical composition in which a total content of elements selected from the element group A is 0% to 0.5%, a total content of Ca and the elements selected from the element group A is 0.1% to less than 3.0%, a total content of elements selected from the element group B is 0% to 0.25%, a total content of elements selected from the element group C is 0% to 0.5%, and a total content of elements selected from the element group D is 0% to 20.00%.

Patent Document 4 discloses a coated steel including a coating layer including a Zn-Al-Mg alloy layer disposed on a surface of a steel base material, in which the coating layer has a chemical composition including, in terms of mass%, Zn: more than 65.0%, Al: more than 5.0% to less than 25.0%, Mg: more than 3.0% to less than 12.5%, Sn: 0.1% to 20.0%, and impurities, Al crystals are present in a reflected electron image of the Zn-Al-Mg alloy layer obtained when the surface of the Zn-Al-Mg alloy layer is polished to 1/2 of the layer thickness and then observed with a scanning electron microscope at a magnification of 100, and an average value of cumulative peripheral lengths of the Al crystals is 88 to 195 mm/mm².

However, in the coated materials described in Patent Documents 1 to 4, improvement of defect resistance is not considered.

### Citation List

### Patent Document

Patent Document 1: Japanese Unexamined Patent Application, First Publication No. 2019-173138
Patent Document 2: Japanese Patent No. 6428974
Patent Document 3: Japanese Patent No. 6365807
Patent Document 4: PCT International Publication No. WO 2019/221193

### SUMMARY OF INVENTION

### Technical Problem

The present invention has been made in view of the above circumstances, and an object thereof is to provide a coated steel having exceptional defect resistance and also having exceptional corrosion resistance of a defect portion.

### Solution to Problem

In order to solve the above problem, the present invention adopts the following configuration.
[1] A coated steel according to one aspect of the present invention is a coated steel including: a steel material; and a coating layer provided on a surface of the steel material, in which the coating layer has an average chemical composition including, in terms of mass%, Al: more than 5.0% to 30.0%, Mg: more than 4.0% to 12.5%, B: more than 0.01% to 1.00%, Cr: 0% to 0.25%, Ti: 0% to 0.25%, Zr: 0% to 0.25%, V: 0% to 0.25%, Sn: 0% to 3.00%, Bi: 0% to 1.00%, In: 0% to 1.00%, Ca: 0% to 3.00%, Y: 0% to 0.50%, La: 0% to 0.50%, Ce: 0% to 0.50%, Sr: 0% to 0.50%, Si: 0% to 2.50%, P: 0% to 0.50%, Ni: 0% to 1.0%, Co: 0% to 0.25%, Nb: 0% to 0.25%, Cu: 0% to 1.00%, Mn: 0% to 0.25%, Li: 0% to 0.50%, Na: 0% to 0.05%, K: 0% to 0.05%, Ba: 0% to 0.25%, Ag: 0% to 1.00%, Mo: 0% to 0.25%, W: 0% to 0.25%, Fe: 0% to 5.00%, Sb: 0% to 0.50%, Pb: 0% to 0.50%, and the remainder: more than 60.00% of Zn and impurities, the coating layer contains, in terms of area fraction of a cross section of the coating layer in a thickness direction in a scanning electron microscope visual field, a MgZn₂ phase: 10% to less than 60%, an Al-Zn phase: 10% to less than 50%, a [ternary eutectic structure of Al/MgZn₂/Zn]: 10% or more, a boride: 0.02 to less than 3.00%, and a remainder in microstructure, and the boride is one or two or more of AlB₂, AlB₁₂, CrB₂, TiB₂, VB₂, and ZrB₂.
[2] A coated steel according to another aspect of the present invention is a coated steel including: a steel material; and a coating layer provided on a surface of the steel material, in which the coating layer has an average chemical composition including, in terms of mass%, Al: more than 5.0% to 30.0%, Mg: more than 4.0% to 12.5%, B: more than 0.01% to 1.00%, Cr: 0% to 0.25%, Ti: 0% to 0.25%, Zr: 0% to 0.25%, V: 0% to 0.25%, Sn: 0% to 3.00%, Bi: 0% to 1.00%, In: 0% to 1.00%, Ca: 0% to 3.00%, Y: 0% to 0.50%, La: 0% to 0.50%, Ce: 0% to 0.50%, Sr: 0% to 0.50%, Si: 0% to 2.50%, P: 0% to 0.50%, Ni: 0% to 1.0%, Co: 0% to 0.25%, Nb: 0% to 0.25%, Cu: 0% to 1.00%, Mn: 0% to 0.25%, Li: 0% to 0.50%, Na: 0% to 0.05%, K: 0% to 0.05%, Ba: 0% to 0.25%, Ag: 0% to 1.00%, Mo: 0% to 0.25%, W: 0% to 0.25%, Fe: 0% to 5.00%, Sb: 0% to 0.50%, Pb: 0% to 0.50%, and the remainder: more than 60.00% of Zn and impurities: the coating layer contains, in terms of area fraction of a cross section of the coating layer in a thickness direction in a scanning electron microscope visual field, a MgZn₂ phase: 10% to less than 60%, an Al phase and an Al-Zn phase: 10% to less than 50% in total, a [ternary eutectic structure of Al/MgZn₂/Zn]: 10% or more, a boride: 0.02 to less than 3.00%, and a remainder in microstructure, and the boride is one or two or more of AlB₂, AlB₁₂, CrB₂, TiB₂, VB₂, and ZrB₂.
[3] The coated steel according to [1], in which the average chemical composition of the coating layer may include one or two or more of Ca, Y, La, Ce, and Sr: 0.01 mass% or more.
[4] The coated steel according to [2], in which the average chemical composition of the coating layer may include one or two or more of Ca, Y, La, Ce, and Sr: 0.01 mass% or more.
[5] The coated steel according to any one of [1] to [4], in which a ratio of an area fraction of a boride having a circle equivalent diameter of 1 to 5 µm to an area fraction of the boride in the cross section of the coating layer in the thickness direction may be 80% or more.

### Advantageous Effects of Invention

According to the above aspect of the present invention, it is possible to provide a coated steel having exceptional defect resistance and also having exceptional corrosion resistance of a defect portion.

### DESCRIPTION OF EMBODIMENTS

The Zn-Al-Mg-based coating layer has higher corrosion resistance than an ordinary Zn coating layer. Therefore, it has been considered that a coated steel sheet having exceptional defect resistance and exceptional corrosion resistance of a defect portion can be achieved by improving the defect resistance of a coated steel including a Zn-Al-Mg-based coating layer. Then, as a result of intensive studies, the present inventors have found that the hardness of the coating layer is increased by dispersing a boride in the coating layer, and thus the defect resistance and corrosion resistance of the defect portion can be improved.

Since the coated steel according to the present invention has exceptional defect resistance, the coating layer is less likely to have defects even when the coated steel comes into contact with another forming parts, coated steel, or the like. Further, corrosion is less likely to progress even when the coated steel has defects. Therefore, a steel structure manufactured by the coated steel according to the present invention has exceptional corrosion resistance.

Hereinafter, a coated steel according to an embodiment of the present invention (coated steel according to the present embodiment) will be described.

The coated steel according to the present embodiment is a coated steel including: a steel material; and a coating layer provided on a surface of the steel material, in which the coating layer has an average chemical composition including, in terms of mass%, Al: more than 5.0% to 30.0%, Mg: more than 4.0% to 12.5%, B: more than 0.01% to 1.00%, Cr: 0% to 0.25%, Ti: 0% to 0.25%, Zr: 0% to 0.25%, V: 0% to 0.25%, Sn: 0% to 3.00%, Bi: 0% to 1.00%, In: 0% to 1.00%, Ca: 0% to 3.00%, Y: 0% to 0.50%, La: 0% to 0.50%, Ce: 0% to 0.50%, Sr: 0% to 0.50%, Si: 0% to 2.50%, P: 0% to 0.50%, Ni: 0% to 1.0%, Co: 0% to 0.25%, Nb: 0% to 0.25%, Cu: 0% to 1.00%, Mn: 0% to 0.25%, Li: 0% to 0.50%, Na: 0% to 0.05%, K: 0% to 0.05%, Ba: 0% to 0.25%, Ag: 0% to 1.00%, Mo: 0% to 0.25%, W: 0% to 0.25%, Fe: 0% to 5.00%, Sb: 0% to 0.50%, Pb: 0% to 0.50%, and the remainder: more than 60.00% of Zn and impurities, the coating layer contains, in terms of area fraction of a cross section of the coating layer in a thickness direction in a scanning electron microscope visual field, a MgZn₂ phase: 10% to less than 60%, an Al-Zn phase: 10% to less than 50%, a [ternary eutectic structure of Al/MgZn₂/Zn]: 10% or more, a boride: 0.02 to less than 3.00%, and a remainder in microstructure, and the boride is one or two or more of AlB₂, AlB₁₂, CrB₂, TiB₂, VB₂, and ZrB₂.

In addition, the coated steel according to the present embodiment is a coated steel including: a steel material; and a coating layer provided on a surface of the steel material, in which the coating layer has an average chemical composition including, in terms of mass%, Al: more than 5.0% to 30.0%, Mg: more than 4.0% to 12.5%, B: more than 0.01% to 1.00%, Cr: 0% to 0.25%, Ti: 0% to 0.25%, Zr: 0% to 0.25%, V: 0% to 0.25%, Sn: 0% to 3.00%, Bi: 0% to 1.00%, In: 0% to 1.00%, Ca: 0% to 3.00%, Y: 0% to 0.50%, La: 0% to 0.50%, Ce: 0% to 0.50%, Sr: 0% to 0.50%, Si: 0% to 2.50%, P: 0% to 0.50%, Ni: 0% to 1.0%, Co: 0% to 0.25%, Nb: 0% to 0.25%, Cu: 0% to 1.00%, Mn: 0% to 0.25%, Li: 0% to 0.50%, Na: 0% to 0.05%, K: 0% to 0.05%, Ba: 0% to 0.25%, Ag: 0% to 1.00%, Mo: 0% to 0.25%, W: 0% to 0.25%, Fe: 0% to 5.00%, Sb: 0% to 0.50%, Pb: 0% to 0.50%, and the remainder: more than 60.00% of Zn and impurities, the coating layer contains, in terms of area fraction of a cross section of the coating layer in a thickness direction in a scanning electron microscope visual field, a MgZn₂ phase: 10% to less than 60%, an Al phase and an Al-Zn phase: 10% to less than 50% in total, a [ternary eutectic structure of Al/MgZn₂/Zn]: 10% or more, a boride: 0.02 to less than 3.00%, and a remainder in microstructure, and the boride is one or two or more of AlB₂, AlB₁₂, CrB₂, TiB₂, VB₂, and ZrB₂.

Further, it is preferable that the average chemical composition of the coating layer includes one or two or more of Ca, Y, La, Ce, and Sr: 0.01 mass% or more.

Furthermore, it is preferable that a ratio of an area fraction of a boride having a circle equivalent diameter of 1 to 5 µm to an area fraction of the boride in the cross section of the coating layer in the thickness direction is 80% or more.

In the following description, the expression "%" of the content of each element in an average chemical composition means "mass%". In addition, a numerical range represented by "to" means a range including the numerical values described before and after "to" as the lower limit and the upper limit. A numerical range in which "more than" or "less than" is attached to the numerical values described before and after "to" means a range not including these numerical values as the lower limit or the upper limit.

The term "defect resistance" refers to a property that the coating layer itself is less likely to have defects. Since the Zn-based coating layer is not as hard as the steel material, the surface of the coating layer is likely to have a defect when another member comes into contact with the coating layer. However, the coating layer according to the present embodiment has high hardness, and thus has a property of being less likely to have a defect.

"Corrosion resistance" indicates a property that a coating layer itself is hardly corroded. The Zn-based coating layer has a sacrificial corrosion protection action on the steel material. Therefore, in a corrosion process of the coated steel, the coating layer is corroded and turns into white rust before the steel material is corroded, the coating layer that has turned into white rust disappears, and then the steel material is corroded to generate red rust.

The term "corrosion resistance of a defect portion" refers to a property that the coating layer itself is hardly corroded even when a defect portion is formed by contact of another member with the surface of the coating layer and part of the coating layer is lost in the defect portion.

The kind of the steel material is not particularly limited. For example, various steel materials such as a general steel, an Al-killed steel, an ultra low carbon steel, a high carbon steel, various high tensile strength steels, and some high alloy steels (a steel containing a reinforcing element such as Ni or Cr) are applicable to the steel material.

As the steel material, various steel sheets, steel wire rods, and steel wires can be applied, and the size thereof is not particularly limited. When the steel material is a steel sheet, any steel sheet may be used as long as it can be applied to an ordinary hot-dip galvanizing step. **In** particular, steel sheets applicable in the step of solidification by immersion in molten metal, such as a continuous hot-dip galvanizing line (CGL), apply to this. As the size of the steel sheet, for example, a steel sheet having a sheet thickness of 10 mm or less and a sheet width of 2000 mm or less can be applied, but the size of the steel sheet is not limited thereto.

Furthermore, as the steel material, a mild steel wire, a hard steel wire, spring steel, a steel cord, a bolt steel, a steel wire rod for bridge cable, or the like may be applied.

More specifically, for example, a cold-rolled steel sheet defined in JIS G 3131:2018 and JIS G 3141:2021, a steel sheet included in a general structural rolled steel material corresponding to a so-called SS material, a so-called general steel included in a hot-rolled steel sheet, a pre-coated steel such as JIS H 8641:2021, JIS G 3302:2022, JIS G 3303:2022, JIS G 3313:2021, JIS G 3314:2022, JIS G 3315:2022, JIS G 3317:2022, and JIS G 3321:2022 in which various metals are thinly coated, Al killed steel shown in JIS G 3136:2022, ultra low carbon steel, high carbon steel, various high tensile strength steels described in JIS G 3113:2018, JIS G 3134:2018, and JIS G 3135:2018, and some of high alloy steels (e.g. steels containing corrosion resistance-enhancing elements such as Ni and Cr) can be applied.

Further, a Ni coating layer, a Cr coating layer, or a Mo coating layer having an adhesion amount of 0.3 to 5 g/m² may be provided in advance as pre-coating on the surface of the steel material. The use of such a steel material including the pre-coating layer makes it possible to suppress the growth of the Al-Fe-based interface alloy layer, to suppress the occurrence of powdering and the like, and to improve the workability. Further, a steel material on which a metal film or an alloy film made of Zn, Ni, Sn, an alloy thereof, or the like and having a thickness of 1 µm or less is formed may be used.

In addition, the steel material is not particularly limited in terms of conditions such as a method for manufacturing the steel material and a method for manufacturing a steel sheet (a hot rolling method, a pickling method, a cold rolling method, or the like).

Next, the coating layer will be described. The coating layer according to the present embodiment includes a Zn-Al-Mg-based alloy layer. The Zn-Al-Mg-based alloy layer in which alloying elements such as Al and Mg are added to Zn has improved corrosion resistance as compared with an ordinary Zn coating layer. For example, even when the thickness of the Zn-Al-Mg-based alloy layer is about a half of that of an ordinary Zn coating layer, the Zn-Al-Mg-based alloy layer has corrosion resistance equivalent to that of the Zn coating layer. Therefore, the coating layer according to the present embodiment also has corrosion resistance equivalent to or higher than that of the Zn coating layer. The coating layer may include an Al-Fe alloy layer.

The Zn-Al-Mg-based alloy layer is made of a Zn-Al-Mg-based alloy. The Zn-Al-Mg-based alloy means an alloy containing Zn, Al, and Mg as a whole.

The Al-Fe alloy layer is an interface alloy layer between the steel material and the Zn-Al-Mg alloy layer, and is in contact with the surface of the steel material.

That is, the coating layer according to the present embodiment may have a single-layer structure of the Zn-Al-Mg alloy layer or a multi-layer structure including the Zn-Al-Mg alloy layer and the Al-Fe alloy layer. In the case of the multi-layer structure, the Zn-Al-Mg alloy layer is preferably a layer constituting a surface of the coating layer. On the outermost surface of the coating layer, an oxide film of the constituent elements of the coating layer is formed with a thickness of about 1 µm or less. The oxide film is thin with respect to the thickness of the entire coating layer, and thus may be ignored from the main constituent of the coating layer.

The thickness of the entire coating layer is preferably 10 to 70 µm. In general, the thickness of the coating layer has a correlation with corrosion resistance. As the thickness becomes larger, the corrosion resistance is more exceptional, and the defect resistance is enhanced. On the other hand, the thickness of the coating layer has limitation due to lifting of the molten metal bath, and a large amount of coated metal is required to thicken the coating layer, which leads to an increase in cost. Therefore, the thickness of the coating layer is preferably set to 70 µm or less. When the thickness of the coating layer is less than 10 µm, corrosion resistance is reduced, and therefore the thickness of the coating layer is preferably 10 µm or more.

When the coating layer includes an Al-Fe alloy layer, the thickness of the Al-Fe alloy layer is about several 10 nm to 5 µm. The Al-Fe alloy layer bonds the steel material and the Zn-Al-Mg-based alloy layer to improve peeling resistance of the coating layer. The thickness of the Al-Fe alloy layer as the interface alloy layer can be controlled to any thickness by controlling a molten metal bath temperature and molten metal bath immersion time during manufacture of the coated steel. Ordinarily, since the interface alloy layer has a thickness of about 1/10 or less as compared with the Zn-Al-Mg-based alloy layer, the interface alloy layer has a small influence on the entire corrosion resistance, and there is no problem in forming the Al-Fe alloy layer having such a thickness.

Since the thickness of the entire coating layer depends on coating conditions, the thickness of the entire coating layer is not limited to the range of 10 to 70 µm. The thickness of the entire coating layer is affected by the viscosity and specific gravity of a molten metal bath in an ordinary hot-dip coating process. Then, the thickness of the entire coating layer is adjusted by the drawing speed of the steel material (original sheet to be coated) and the intensity of the wiping.

The Al-Fe alloy layer is formed on a surface of the steel material (specifically, between the steel material and the Zn-Al-Mg alloy layer), and is a layer having an Al₅Fe phase as a main phase in the microstructure. The Al-Fe alloy layer is formed by mutual atomic diffusion of a base metal (steel material) and a molten metal bath. When a hot-dip coating process is used as a manufacturing method, the Al-Fe alloy layer is easily formed in a coating layer containing an Al element. Since a certain concentration or more of Al is contained in the molten metal bath, the Al₅Fe phase is formed most. However, the atomic diffusion takes time, and there is a portion where the Fe concentration is high in a portion close to the base metal. Therefore, a small amount of an AlFe phase, an Al₃Fe phase, an Al₅Fe₂ phase, or the like may be partially contained in the Al-Fe alloy layer. In addition, since a certain concentration of Zn is also contained in the molten metal bath, a small amount of Zn is also contained in the Al-Fe alloy layer.

When Si is contained in the coating layer, Si is particularly easily incorporated into the Al-Fe alloy layer, and an Al-Fe-Si intermetallic compound phase may be formed. An intermetallic compound phase to be identified is, for example, an AlFeSi phase, and α, β, q1, q2-AlFeSi phases and the like exist as isomers. Therefore, these AlFeSi phases and the like may be detected in the Al-Fe alloy layer. The Al-Fe alloy layer containing these AlFeSi phases and the like is also referred to as an Al-Fe-Si alloy layer.

Next, the average chemical composition of the coating layer will be described. When the coating layer has a single-layer structure of the Zn-Al-Mg alloy layer, the average chemical composition of the entire coating layer is the average chemical composition of the Zn-Al-Mg alloy layer. When the coating layer has a multi-layer structure of the Al-Fe alloy layer and the Zn-Al-Mg alloy layer, the average chemical composition of the entire coating layer is the average chemical composition of total of the Al-Fe alloy layer and the Zn-Al-Mg alloy layer.

In the hot-dip coating process, the chemical composition of the Zn-Al-Mg alloy layer is ordinarily almost the same as that of the molten metal bath because the formation reaction of the coating layer is almost completed in the molten metal bath. In the hot-dip coating process, the Al-Fe alloy layer is instantaneously formed and grown immediately after immersion in the molten metal bath. The formation reaction of the Al-Fe alloy layer is completed in the molten metal bath, and the thickness of the Al-Fe alloy layer is often sufficiently smaller than that of the Zn-Al-Mg alloy layer. Therefore, unless a special heat treatment such as a heat alloying treatment is performed after coating, the average chemical composition of the entire coating layer is substantially equal to the chemical composition of the Zn-Al-Mg alloy layer, and the components of the Al-Fe alloy layer and the like can be ignored.

### Al: more than 5.0% and 30.0% or less

Similarly to Zn, Al is an element mainly constituting the coating layer. Although the sacrificial corrosion protection action of Al is small, flat portion corrosion resistance is improved when Al is contained in the coating layer. **In** addition, when Al is not present, Mg cannot be stably held in the molten metal bath, so that Al is contained in the molten metal bath as an essential element in the manufacturing.

The reason why the Al content is more than 5.0% is that the content of more than 5.0% is a content necessary for containing a large amount of Mg described later or a content necessary for securing corrosion resistance to some extent. When the content is equal to or less than this content, it is difficult to form a molten metal bath, and it is further difficult to secure corrosion resistance. The reason why the Al content is 30.0% or less is that Al has a weak sacrificial corrosion protection action on the steel material, and when the Al content is 30.0% or more, a sufficient sacrificial corrosion resistance cannot be obtained. The Al content may be 8.0% to 25.0%, 10.0% to 22.5%, or 12.5% to 20.0%.

### Mg: more than 4.0% and 12.5% or less

Mg is an element that has a sacrificial corrosion protection effect and enhances corrosion resistance of the coating layer. When a certain amount or more of Mg is contained in the coating layer, an MgZn₂ phase is formed in the coating layer. As the Mg content in the coating layer is high, more MgZn₂ phase is formed. The MgZn₂ phase is known to have a structure called a Laves phase, and the hardness thereof is high, and thus the defect resistance is improved.

The Mg content is more than 4.0%, because the concentration is required to exhibit corrosion resistance even in the defect portion, and sufficient corrosion resistance cannot be obtained when Mg is 4.0% or less. In addition, the MgZn₂ phase is not sufficiently formed in the coating layer, and the defect resistance of the coating layer itself is low. On the other hand, when the Mg content is excessive, it is difficult to manufacture the coating layer. Thus, the Mg content is 12.5% or less. The Mg content is more preferably 5.0% to 12.5%, may be 6.0% to 10.0%, or may be 6.0% to 8.0%.

### B: more than 0.01% and 1.00% or less

Boron (B) is an element that forms a boride represented by AlB₂, AlB₁₂, and AB₂ which is a compound of the following element group A and boron (B). Since B has relatively low solubility in Zn or Al in a molten state, B in excess of the solubility limit is present in the molten metal bath as a boride. When B is added to a pure Zn bath or a pure Al bath, the boride in the bath is precipitated or floated due to a difference in specific gravity with the molten metal bath. Thus, it is difficult to add the boride to the coating layer. On the other hand, in the case of the Zn-Al-Mg bath according to the present embodiment, a difference in specific gravity between the molten metal bath and the boride is small, a large amount of boride can be contained in the coating layer. The boride has high hardness and thus the hardness of the coating layer is increased by containing the boride in the coating layer. Accordingly, the defect resistance is improved and the corrosion resistance of the defect portion is also improved. When the B content is 0.01% or less, the effect of improving the defect resistance is insufficient. However, when the B content exceeds 1.00%, generation of a large amount of dross and bare spots frequently occurs. Therefore, the B content is more than 0.01% and 1.00% or less. The B content may be 0.02% to 0.80%, 0.05% to 0.60%, or 0.10% to 0.40%.

The coating layer according to the present embodiment may or need not contain one or two or more elements of the following element groups A to F.

### Element group A

Cr:0% to 0.25%
Ti:0% to 0.25%
Zr:0% to 0.25%
V :0% to 0.25%

When the element of the element group A is contained together with B, borides represented by CrB₂, TiB₂, ZrB₂, and VB₂ are formed. Since these borides are very hard with a hardness of 600 Hv or more, the presence of these borides dispersed in the coating layer has an effect of increasing the average hardness of the coating layer and improving defect resistance. In addition, these borides promote the elution of the coating layer by the potential. Accordingly, when the steel material is exposed from the coating layer due to generation of flaws, the exposed portion is quickly covered with the corrosion product, and thus the corrosion resistance of the defect portion is improved. When the total of the elements of the element group A is 0.01% or more, the above effect is exhibited and the corrosion resistance of the defect portion is improved. On the other hand, there is an upper limit to the content of these elements. When the upper limit is exceeded, adhesion of dross or the like increases. Therefore, Cr, Ti, Zr, and V are each 0% to 0.25%. Cr, Ti, Zr, and V are each preferably more than 0% and 0.25% or less, and more preferably 0.01% to 0.25% or less.

### Element group B

Sn:0% to 3.00%
Bi:0% to 1.00%
In:0% to 1.00%

The elements of the element group B have a function of improving sacrificial corrosion resistance of the coating layer. Note that, these elements tend to be bonded more strongly to Mg than to Zn, when these elements of the element group B are bonded to Mg and the effect of Mg contained is reduced, and thus there is an upper limit to the content of the elements of the element group B. When the upper limit is exceeded, adhesion of dross or the like increases, and corrosion resistance tends to deteriorate. Therefore, Sn is 0% to 3.00%, more preferably more than 0% and 3.00% or less. Bi is 0% to 1.00%, more preferably more than 0% and 1.00% or less. In is 0% to 1.00%, more preferably more than 0% and 1.00% or less.

### Element group C

Ca:0% to 3.00%
Y :0% to 0.50%
La:0% to 0.50%
Ce:0% to 0.50%
Sr:0% to 0.50%

Ca, Y, La, Ce, and Sr as the element group C are easily oxidized in the air, and when present in the molten metal bath, form a dense oxide film on the bath surface, and have an effect of preventing the oxidation of Mg. Through the above effect, the Mg concentration in the coating layer is stabilized, and the coating layer having a target composition is easily manufactured. In order to suitably exhibit such an effect, the content of each of these elements is more than 0%, and more preferably 0.01% or more. When Ca is contained in an amount of 0.01% or more, an Al-Ca-Si-based or Ca-Al-Zn-based compound is easily formed. These compounds have high hardness and improve defect resistance. Y, La, Ce, and Sr also form a similar compound (Ca substitution product), and have the same effect. In addition, there is an upper limit to the content of each element. When the content exceeds the upper limit, it tends to be difficult to form a molten metal bath. In addition, adhesion of dross or the like increases, and corrosion resistance tends to deteriorate. Therefore, the Ca content is 0% to 3.00%, preferably 0.01% to 2.00%, and more preferably 0.01% to 1.00%. Further, the content of each of Y, La, Ce, and Sr is 0% to 0.50%, preferably more than 0% and 0.50% or less, and more preferably 0.01% to 0.50%.

### Element group D

Si:0% to 2.50%
P :0% to 0.50%

Si and P as the element group D are elements belonging to a semimetal. These elements also generally form an intermetallic compound containing Zn and Al in the coating layer. There is an upper limit to the content of each of the elements, and when the content exceeds the upper limit, adhesion of dross or the like tends to increase, and corrosion resistance tends to deteriorate. Therefore, Si is 0% to 2.50%, and preferably more than 0% and 2.50% or less. The P content is 0% to 0.5% or less, and preferably more than 0% and 0.5% or less.

### Element group E

Ni:0% to 1.0%
Co:0% to 0.25%
Nb:0% to 0.25%
Cu:0% to 1.00%
Mn:0% to 0.25%
Li:0% to 0.50%
Na:0% to 0.05%
K :0% to 0.05%
Ba:0% to 0.25%
Ag:0% to 1.00%
Mo:0% to 0.25%
W :0% to 0.25%
Fe:0% to 5.00%

Ni, Co, Nb, Cu, Mn, Li, Na, K, Ba, Ag, Mo, W, and Fe as the element group E are metal elements. These elements are incorporated into the coating layer to form a substituted solid solution or a new intermetallic compound having a high melting point. This leads to an increase in hardness of the coating layer, but the improvement effect is small. Particularly, when at least one or more elements of the element group A are present, a clear effect cannot be confirmed. There is an upper limit to the content of the element of the element group E. When the content exceeds the upper limit, adhesion of dross or the like tends to increase. Therefore, Ni is 0% to 1.0%, and preferably more than 0% and 1.0% or less. Cu and Ag are each 0% to 1.00%, and preferably more than 0% and 1.00% or less. Co, Nb, Mn, Ba, Mo, and W are each 0% to 0.25%, and preferably more than 0% and 0.25% or less. Li is 0% to 0.50%, and preferably more than 0% and 0.50% or less. Na and K are each 0% to 0.05%, and preferably more than 0% and 0.05% or less.

In addition, Fe may be inevitably contained in the coating layer. This is because Fe may be diffused from the base metal into the coating layer during manufacture of coating. Therefore, the Fe content is 0% to 5.00%, and may be more than 0% and 5.00% or less. In addition, Fe may be 2.00% or less, 1.00% or less, or 0.50% or less.

### Element group F

Sb:0% to 0.50%
Pb:0% to 0.50%

Sb and Pb as the element group F are elements having properties similar to those of Zn. Therefore, when these elements are contained, a special effect is hardly exhibited, but there is an effect that a spangle pattern is easily formed on an external appearance of coating, or the like. However, when these elements are excessively contained, corrosion resistance may be deteriorated. Therefore, Sb and Pb are each 0% to 0.50%, and preferably more than 0% and 0.50% or less.

### Remainder: more than 60.00% of Zn and impurities

Zn is a metal having a low melting point, and exists as a main phase of the coating layer on the steel material. Zn is an element necessary for securing corrosion resistance and obtaining a sacrificial corrosion protection action on the steel material. The Zn content is not particularly limited, but when the Zn content is 60.00% or less, the main component of the metallographic structure of the Zn-Al-Mg alloy layer becomes the Al phase, and the Zn phase exhibiting sacrificial corrosion resistance is insufficient. Therefore, the Zn content is preferably more than 60.00%. The Zn content is more preferably 70.00% or more. The upper limit of the Zn content is the amount of the remainder other than elements excluding Zn and impurities.

The impurity refers to a component that is contained in the raw material or mixed in the manufacturing step and not intentionally contained. For example, in the coating layer, a small amount of component other than Fe may be mixed as the impurity due to mutual atomic diffusion between the steel material (base metal) and the molten metal bath.

In order to identify the average chemical composition of the coating layer, an acid solution is obtained in which the coating layer is peeled off and dissolved with an acid containing an inhibitor that suppresses corrosion of the base metal (steel material). Next, the obtained acid solution is measured by ICP emission spectrometry or ICP-MS, whereby the chemical composition (average chemical composition) can be obtained. The type of the acid is not particularly limited as long as the acid can dissolve the coating layer. If the area and weight before and after peeling are measured, a coating adhesion amount (g/m²) can also be obtained at the same time.

Next, a microstructural morphology of the coating layer will be described.

A ratio and size of a phase contained in the coating layer largely affect defect resistance of the coating layer. Even if the coating layers have the same composition, phases or microstructures included in the metallographic structure change depending on the manufacturing method, and the properties thereof differ from each other. The metallographic structure of the coating layer can be easily confirmed by a scanning electron microscope (SEM-EDS) with an energy dispersive X-ray analyzer. The state of the approximate metallographic structure of the coating layer can be confirmed by, for example, obtaining a reflected electron image in an arbitrary vertical cross section (thickness direction) of a mirror-finished coating layer. Since the thickness of the coating layer according to the present embodiment is about 10 to 70 µm, it is preferable to confirm a metallographic structure thereof in a visual field at a magnification of 500 to 5,000 times in SEM. For example, when a coating layer having a thickness of 25 µm is confirmed at a magnification of 2,000 times, a cross section of the coating layer in a region of 25 µm (coating thickness) × 40 µm (SEM field width) = 1,000 µm² can be confirmed per one visual field. In the present embodiment, the area fraction and size of the phase or microstructure constituting the metallographic structure of the coating layer are determined by observing the metallographic structure in a total visual field of 10000 µm² or more so that the visual field of the SEM with respect to the coating layer is observed not in the local visual field. In the case of observation in a region of 25 µm (coating thickness) × 40 µm (SEM field width) = 1000 µm² per visual field, in order to obtain average information of the coating layer, 10 visual fields may be selected from an arbitrary cross section and used as the average information.

The reflected electron image by SEM is preferable in that a phase or a microstructure included in the coating layer can be easily distinguished. An element having a small atomic number, such as Al is imaged in black, and an element having a large atomic number, such as Zn is imaged in white. Therefore, a ratio of each of these microstructures can be easily read.

In order to confirm each phase, the composition of the phase may be confirmed at pinpoint in the EDS analysis, and a phase having substantially equivalent components may be read from element mapping or the like to specify the phase. When EDS analysis can be used, a phase having almost the same composition can be discriminated by element mapping. If a phase having almost the same composition can be specified, the area of a crystal phase in an observed visual field can be found. If the area is grasped, the average grain size can be calculated by obtaining the circle equivalent diameter by calculation.

In addition, the area percentage of each phase in the observed visual field can be obtained. The area fraction of a specific phase in the coating layer corresponds to the volume percentage of the phase in the coating layer.

The coating layer according to the present embodiment includes an MgZn₂ phase, an Al-Zn phase, an [Al/MgZn₂/Zn ternary eutectic structure], and a boride. The coating layer may include an Al phase. Further, the coating layer may include the remainder in microstructure.

### MgZn₂ phase

The MgZn₂ phase according to the present embodiment is a region in which an Mg concentration is 16 mass% (± 5%) and a Zn concentration is 84 mass% (± 5%) in the coating layer. The MgZn₂ phase can be determined by EDS analysis. Since the MgZn₂ phase is often photographed in gray as an intermediate color between Al and Zn in a reflected electron image of the SEM, the MgZn₂ phase can be clearly distinguished from the Al-Zn phase, the Al phase, [ternary eutectic structure of Al/MgZn₂/Zn], and the like in the reflected electron image of the SEM.

The MgZn₂ phase itself has high hardness, and thus the hardness of the coating layer increases in proportion to the proportion of the MgZn₂ phase in the coating layer. Therefore, from the viewpoint of defect resistance, it is more preferable as the number of MgZn₂ phases increases. On the other hand, workability and sacrificial corrosion resistance other than defect resistance decrease as the number of MgZn₂ phases increases, and thus there is an upper limit on the area fraction of the MgZn₂ phase. Therefore, the area fraction of the MgZn₂ phase in the coating layer needs to be 10% or more and less than 60%.

### Al phase

The coating layer according to the present embodiment may or need not contain an Al phase. The Al phase is a region where the Al content is more than 40 mass% in the coating layer. The Al phase may contain Zn, but the Zn content is less than 60 mass%. The Al phase can be determined by EDS analysis, and can also be clearly distinguished from other phases and microstructures in a reflected electron image of the SEM. That is, the Al phase is often indicated in the blackest color in the SEM reflected electron image.

In the present embodiment, the Al phase takes various forms, for example, the Al phase appears as a block-shaped cross section or a dendritic cross section such as a circular cross section or a flat cross section in any cross section. In the present embodiment, Al contained in the [ternary eutectic structure of Al/MgZn₂/Zn] is not included in the Al phase.

### Al-Zn phase

The Al-Zn phase in the present embodiment is a phase containing 60 mass% or more of Zn and Al. The Al-Zn phase is an aggregate of a fine Zn phase (hereinafter, referred to as a fine Zn phase) having a grain size of about 1 µm and a fine Al phase (hereinafter, referred to as a fine Al phase) having a grain size of 1 µm or less. In the coating layer in a molten state, Al has a structure different from a crystal structure at room temperature, a large amount of the Zn phase can form a solid solution in Al, and Al exists as a high-temperature stable phase containing about 50% of Zn phase. On the other hand, at room temperature, the content of the Zn phase extremely decreases in this high-temperature stable phase, Al and Zn are equilibrium-separated, and Al exists as an Al-Zn phase including a fine Al phase and a fine Zn phase. That is, the Al-Zn phase is a phase that contains the fine Zn phase in a proportion of more than 60 mass% and 85 mass% or less. The Al-Zn phase has different properties from the Al phase contained in the coating layer and a massive Zn phase containing more than 85 mass% of Zn, and thus is distinguished in a reflected electron SEM image or wide-angle X-ray diffraction. In wide-angle X-ray diffraction, it is said to have specific diffraction peaks such as Al_{0.403}Zn_{0.597} (JCODF #00-052-0856) and Al_{0.71}Zn_{0.29} (PDF#00-019-0057). Therefore, in the present embodiment, a phase containing 15 mass% or more and 40 mass% or less of an Al component, and 60 mass% or more and 85 mass% or less of a Zn component is an Al-Zn phase. A crystal size of the Al-Zn phase can also be defined by surrounding a region of the Al-Zn phase in a closed space.

The Al-Zn phase is relatively soft, and thus the defect resistance is improved when the area fraction of the Al-Zn phase in the microstructure decreases. On the other hand, a certain amount or more of the Al-Zn phase is required for ensuring workability, the area fraction of the Al-Zn phase needs to be 10% or more and less than 50%.

**In** addition, when the coating layer contains both the Al-Zn phase and the Al phase, the Al phase is also relatively soft, and thus the defect resistance is improved when the area fraction in the microstructure decreases. On the other hand, in order to ensure workability, a certain amount or more of each of the Al phase and the Al-Zn phase (sometimes collectively referred to as an Al-containing phase) is needed. Therefore, the total area fraction of the Al phase and the Al-Zn phase needs to be 10% or more and less than 50%.

### [Ternary eutectic structure of Al/MgZn₂/Zn]

The [ternary eutectic structure of Al/MgZn₂/Zn] is a eutectic structure including an Al phase, an MgZn₂ phase, and a Zn phase, and is clearly distinguished from the MgZn₂ phase contained as the main phase of the coating layer and the above-described Al phase in the reflected electron SEM image. Specifically, a lamellar microstructure having a Zn phase as a constituent element can be determined to be a ternary eutectic structure.

When a total area fraction of the [ternary eutectic structure of Al/MgZn₂/Zn] is less than 10 area%, the Zn phase in the ternary eutectic structure decreases as the area fraction decreases, the sacrificial corrosion resistance of the coating layer decreases, and the corrosion resistance of the defect portion cannot be maintained. Therefore, the area fraction of [ternary eutectic structure of Al/MgZn₂/Zn] needs to be 10 area% or more. The presence of the [ternary eutectic structure of Al/MgZn₂/Zn] including the Zn phase to some extent makes it possible to ensure sacrificial corrosion resistance and to improve corrosion resistance. The upper limit of the area fraction of the [ternary eutectic structure of Al/MgZn₂/Zn] is not particularly limited, but may be 75 area% or less, 70 area% or less, or 65 area% or less.

### Boride

In the present embodiment, the form of the boride in the coating layer includes any one or two or more of AlB₂, CrB₂, TiB₂, ZrB₂, and VB₂.

Borides other than AlB₂ have a density almost equal to that of the molten metal bath, and thus B added equal to or more than the solubility limit of the molten metal bath can be contained in the coating layer without being precipitated to the bottom of the molten metal bath pot or excessively discharged as top dross. The boride has a high hardness of 600 Hv, and is dispersed and contained in the coating layer, thereby increasing the hardness of the coating layer. As a result, the defect resistance of the coating layer is improved.

In addition, when the coating layer has a defect, the periphery of the boride exposed to a corrosion factor is preferentially corroded due to a potential difference between the boride and the microstructure of another coating layer, and a corrosion product having insulation properties is formed. Once the corrosion product has formed around the boride, the preferential corrosion stops. However, the corrosion product that then flows out quickly covers the defect, thus improving the corrosion resistance of the defect portion.

In order to improve the defect resistance by the boride, it is necessary to set the area fraction of the boride in the coating layer to 0.02 area% or more and less than 3.00 area%. When the area fraction of the boride is less than 0.02 area%, the hardness of the coating layer is not sufficiently increased, and the defect resistance is insufficient. When the area fraction of the boride is 3.00 area% or more, a large amount of coarse boride is contained in the coating layer, and the corrosion resistance of the coating layer may be reduced. The boride according to the present embodiment is AlB₂, CrB₂, TiB₂, ZrB₂, and/or VB₂. Depending on the average chemical composition of the coating layer, not all but some of AlB₂, CrB₂, TiB₂, ZrB₂, and VB₂ may be contained. The area fraction of the boride is the total area ratio of all the borides detected when the cross section in the thickness direction of the coating layer is observed.

The circle equivalent diameter of the boride is not particularly limited, but a coarse boride can act as a corrosive path, and thus the corrosion resistance of the coating layer may be reduced. Therefore, the circle equivalent diameter of the boride is preferably in a range of 1 to 5 µm. In order to achieve both the defect resistance and the corrosion resistance, an area fraction of a boride having a circle equivalent diameter of 1 to 5 µm in the coating layer is preferably 80% or more with respect to the total area fraction of all borides.

The area fraction of the boride is determined by the following method.

In the SEM-EDS, the coating layer in a visual field of 10,000 µm² in total of plural visual fields is mapped, a phase having a B concentration of 1 mass% or more as a semi-quantitative value is specified as a boride, and a ratio of the total area of the boride phase to the area in the observed visual field is derived for calculation.

In the observation of the boride, it is preferable to observe the entire coating layer in the thickness direction and set the average area fraction as a premise of the thickness direction.

The above-described phase, microstructure, and boride constitute the main phase of the coating layer, and the total area ratio of the phase, microstructure, and boride is 90% or more. On the other hand, when an element other than Zn, Mg, and Al is contained in the coating layer, another metal phase may be formed. For example, Si forms a Mg₂Si phase or the like, and Ca forms an Al-Zn-Ca phase or the like. Typical examples of the composition of the remainder in microstructure include a Mg₂Si phase, an AlZnCa phase, and an AlCaSi phase. Some of these metal phases are effective in improving weldability and corrosion resistance, but the effects thereof are not remarkable. From the average chemical composition of the coating layer, it is difficult to make the content ratio of the remainder in microstructure of these metal phases more than 10 area% in total, so that the ratio of the remainder in microstructure is 10 area% or less. The lower limit of the remainder in microstructure may be 0 area%.

Next, a case where the coated steel according to the present embodiment is manufactured by a hot-dip coating process will be described. The coated steel according to the present embodiment can be manufactured by either an immersion type coating process (batch type) or a continuous type coating process.

The size, shape, surface form, and the like of the steel material to be coated are not particularly limited. An ordinary steel material, high tensile strength steel, stainless steel, and the like are applicable as long as they are steel materials. A steel strip of general structural steel is most preferable. A surface may be finished by shot blasting, brush grinding, or the like in advance. There is no problem even if coating is performed after a metal film or an alloy film of Ni, Fe, Zn, Sn, coating, or the like is attached at a thickness of 3 g/m² or less to the surface. In addition, as a pretreatment of the steel material, it is preferable to sufficiently clean the steel material by degreasing and pickling.

After the surface of the steel material is sufficiently heated and reduced by a reducing gas such as H₂, the steel material is immersed in a molten metal bath prepared to contain predetermined components. In high tensile strength steel and the like, it is common to humidify the atmosphere during annealing and to ensure coating adhesion of high Si, Mn steel and the like by utilizing an internal oxidation method and the like. By performing such a treatment, a coated steel with less bare spots and fewer external appearance defects can be ordinarily coated in a similar manner to a general steel material. In such a steel material, a surface of the steel material, in which a grain size is fine and an internal oxide film layer are observed on a base metal side, but do not affect the performance of the present invention.

In the case of the hot-dip coating process, the components of the coating layer can be controlled by the components of the molten metal bath to be prepared. In initial make-up of molten metal bath, an alloy of the molten metal bath components is prepared by mixing predetermined amounts of pure metals, for example, by a dissolution method under an inert atmosphere.

By immersing the steel material whose surface has been reduced in the molten metal bath maintained at a predetermined concentration, a coating layer having substantially the same components as those of the molten metal bath is formed. When the immersion time is prolonged or it takes a long time to complete the solidification, the formation of the interface alloy layer becomes active, so that the Fe concentration may increase. When the temperature is 500°C or lower, the reaction with the coating layer rapidly slows down, so that the concentration of Fe contained in the coating layer ordinarily falls 5.00% or less.

In order to form a hot-dip coating layer, it is preferable to keep the molten metal bath at 450°C to 550°C. In addition, it is preferable to immerse the reduced steel material for several seconds. On a surface of the reduced steel material, Fe may diffuse into the molten metal bath and react with the molten metal bath to form an interface alloy layer (mainly an Al-Fe-based intermetallic compound layer) at an interface between the coating layer and the steel material. When the interface alloy layer is formed, the steel material below the interface alloy layer and the coating layer above the interface alloy layer are metal-chemically bonded to each other more firmly.

After the steel material is immersed in the molten metal bath for a predetermined time, the steel material is pulled up from the molten metal bath. When a metal attached to a surface of the steel material is in a molten state, N₂ wiping is performed, whereby the thickness of the coating layer is adjusted to a predetermined thickness. The thickness of the coating layer is preferably adjusted to 10 to 70 µm. When the above thickness is converted into the adhesion amount of the coating layer, the adhesion amount is 40 to 450 g/m² (one surface).

After adjusting the adhesion amount of the coating layer, the adhered molten metal is solidified. Cooling in the solidification of the coating may be performed by blowing nitrogen, air, or a mixed gas of hydrogen and helium, mist cooling, or immersion in water. Mist cooling is preferable, and mist cooling in which water is contained in nitrogen is preferable. The cooling rate may be adjusted by the content of water.

In the present embodiment, when cooling is performed under coating solidification conditions of ordinary operating conditions, for example, at an average cooling rate of 5 to 20°C/sec between the molten metal bath temperature and 150°C, the microstructure cannot be controlled in some cases, and this may cause an unsatisfactory result in predetermined performance. Therefore, a cooling step capable of obtaining the coating layer according to the present embodiment will be described below.

Average cooling rate between bath temperature and 400°C: 10°C/sec or more, preferably 40 °C/sec or more

In the temperature range of the bath temperature to 400°C, the boride is precipitated as the primary phase, and thus the average cooling rate between the bath temperature and 400°C is set to 10°C/sec or more.

However, when the average cooling rate in this temperature range is further increased, the boride is refined, and the boride is easily uniformly dispersed in the coating layer. Accordingly, it is expected that the defect resistance is further improved. Therefore, in order to prevent coarsening of the boron compound in the cooling process, it is preferable to quickly cool this region, and it is more preferable to set the average cooling rate to 40°C/sec or more.

Average cooling rate between 400°C and 300°C: 40 °C/sec or more

In the temperature range of 400°C to 300°C, precipitation of the Al phase from the liquid phase and the ternary eutectic reaction of the Zn-Al-MgZn₂ phase occur. As a result, the liquid phase disappears and the coating layer is completely solidified. When the average cooling rate in this temperature range is low, the boride may not be uniformly dispersed in the coating layer, and the defect resistance may not be improved.

In the temperature range of 400°C to 300°C, the Al phase is transformed into the Al-Zn phase which is a high-temperature stable phase. That is, the Zn phase formed as [ternary eutectic structure of Al/MgZn₂/Zn] is absorbed in the precipitated Al phase, and the [ternary eutectic structure of Al/MgZn₂/Zn] decreases. Therefore, it is necessary to set at least the average cooling rate to 40°C/sec or more. The average cooling rate is more preferably 50 °C/sec or more.

### Average cooling rate between 300°C and 150°C: 10 °C/sec or less

In the temperature range between 300°C and 150°C, the Al-Zn phase is separated into a fine Al phase and a fine Zn phase. As the phase is separated in this manner, the Al-Zn phase that is weak against defect is reduced. Therefore, it is preferable to gently cool this temperature range. When the average cooling rate between 300 and 150°C is 10°C/sec or less, the Al-Zn phase is separated. Therefore, it is necessary to set the average cooling rate between 300°C and 150°C to 10°C/sec or less.

### Temperature range of 150°C or lower

The cooling rate in a temperature range of 150°C or lower in the solidification process does not affect the constituent phase in the coating layer, and thus cooling conditions are not particularly limited, and natural cooling may be employed.

After the coating layer is cooled, various chemical conversion treatments and coating treatments may be performed. In addition, in order to further enhance corrosion resistance, repair touch-up paint, a thermal spraying treatment, and the like may be performed in a weld, a processed portion, and the like.

In the coated steel according to the present embodiment, a film may be formed on the coating layer. A film having a single layer or two or more layers may be formed. Examples of the type of the film immediately above the coating layer include a chromate film, a phosphate film, and a chromate-free film. The chromate treatment, the phosphating treatment, and the chromate-free treatment for forming these films can be performed by known methods. It is noted that many chromate treatments may deteriorate weldability on the surface of the coating layer. Therefore, the thickness of the film is preferably 1 µm or less in order to sufficiently obtain weldability improving effect in the coating layer.

The chromate treatment includes an electrolytic chromate treatment in which a chromate film is formed by electrolysis, a reaction type chromate treatment in which a film is formed by utilizing a reaction with the material and then the excess treatment liquid is washed away, and an application type chromate treatment in which a film is formed by applying a treatment liquid to an object to be coated and drying the treatment liquid without washing with water. Any treatment may be adopted.

Examples of the electrolytic chromate treatment include an electrolytic chromate treatment using chromic acid, a silica sol, a resin (phosphoric acid, an acrylic resin, a vinyl ester resin, a vinyl acetate acrylic emulsion, a carboxylated styrene-butadiene latex, a diisopropanolamine-modified epoxy resin, and the like), and hard silica.

Examples of the phosphating treatment include a zinc phosphate treatment, a zinc calcium phosphate treatment, and a manganese phosphate treatment.

The chromate-free treatment which does not impose a burden on the environment is particularly suitable. The chromate-free treatment includes an electrolytic chromate-free treatment in which a chromate-free film is formed by electrolysis, a reaction type chromate-free treatment in which a film is formed by utilizing a reaction with the material and then the excess treatment liquid is washed away, and an application type chromate-free treatment in which a film is formed by applying a treatment liquid to an object to be coated and drying the treatment liquid without washing with water. Any treatment may be adopted.

Further, an organic resin film made of a single layer or two or more layers may be formed on the film immediately above the coating layer. The organic resin is not limited to a specific type, and examples thereof include polyester resins, polyurethane resins, epoxy resins, acrylic resins, polyolefin resins, and modified products of these resins. Here, the modified product refers to a resin obtained by causing a reactive functional group included in the structures of these resins to react with another compound (a monomer, a crosslinking agent, or the like) having a functional group capable of reacting with the functional group in the structure thereof.

As such an organic resin, one or more types of organic resins (unmodified organic resins) may be mixed and used, or one or more types of organic resins obtained by modifying, in the presence of at least one type of organic resin, at least one type of other organic resin may be mixed and used. The organic resin film may contain any coloring pigment or an antirust pigment. Also, water-based organic resins which are dissolved or dispersed in water may be used.

The defect resistance and the corrosion resistance of the defect portion of the coated steel according to the present embodiment are evaluated as follows.

### <Defect resistance>

The coating adhesion amount (thickness) is adjusted to 30 µm per one surface and a coated steel sheet having a size of 70×150 mm is prepared. A cut (cross cut) is made in the surface of the coating layer using an automatic cross cut tester. Specifically, a cut is made in the coating surface under a load condition of 400 gf of the cross cut tester using a blade of an NT cutter. Thereafter, the cross cut portion is observed in cross section. In a state where the steel material is exposed due to the tip of the cut reaching the steel material, the corrosion resistance is significantly reduced. On the other hand, when the cut remains in the coating layer, the corrosion resistance is not reduced, and it can be said that the defect resistance is good.

### <Corrosion resistance of defect portion>

In the same manner as described above, a coated steel having a size of 70×150 mm is prepared, and a cut (cross cut) is made in the surface of the coating layer using an automatic cross cut tester. Specifically, a cut is made in the coating surface under a load condition of 400 gf of the cross cut tester using a blade of an NT cutter to form a test piece. The test piece is put into a corrosion testing machine, a composite cycle test is performed by the method in accordance with JASO M609, and the red rust generation state at the cut line is confirmed. The number of cycles at the time when red rust having a length of 10% or more is formed with respect to the total length of the cut line is evaluated. In a case where the formation of the red rust having a length of 10% or more occurs with a small number of cycles, this means that the corrosion resistance of the defect portion is low.

As described above, the coated steel according to the present embodiment has exceptional defect resistance and corrosion resistance of a defect portion, and has also exceptional external appearance of the coating layer.

### Examples

An original sheet of the coated steel was cut out in a size of 180 mm × 100 mm from a cold-rolled steel sheet having a thickness of 0.8 mm. The original sheets were SS400 (general steel). A batch type hot-dip coating simulator (manufactured by RHESCA Co., Ltd.) was used. A K thermocouple was attached to part of the steel sheet, and the sheet surface was sufficiently reduced by annealing at 800°C in a reducing atmosphere of N₂ containing 5% of H₂. The steel sheet was immersed in a molten metal bath for 3 seconds and then pulled up, and the coating thickness was adjusted to be 30 µm (± 1 µm) per one surface by N₂ gas wiping. The coating thicknesses of the front and rear surfaces of the original sheet were the same. After the steel material was pulled up from the molten metal bath, coated steels were cooled under cooling conditions of the following A to E to manufacture coated steels.

Condition A: After the steel material was pulled up from the molten metal bath, the average cooling rate between the bath temperature and 400°C was set to 40°C/sec, the average cooling rate between 400°C and 300°C was set to 50°C/sec, and the average cooling rate between 300°C and 150°C was set to 10°C/sec.

Condition B (comparative condition): After the steel material was pulled up from the molten metal bath, the average cooling rate between the bath temperature and 150°C was constantly set to 50°C/sec (comparative condition).

Condition C (comparative condition): After the steel material was pulled up from the molten metal bath, the average cooling rate between the bath temperature and 150°C was constantly set to 20°C/sec (comparative condition).

Condition D (comparative condition): After the steel material was pulled up from the molten metal bath, the average cooling rate between the bath temperature and 150°C was constantly set to 10°C/sec (comparative condition).

Condition E: After the steel material was pulled up from the molten metal bath, the average cooling rate between the bath temperature and 400°C was set to 10°C/sec, the average cooling rate between 400°C and 300°C was set to 50°C/sec, and the average cooling rates between 300°C and 150°C was set to 10°C/sec.

The average chemical composition of the coating layer was measured as follows. An acid solution was obtained in which the coating layer was peeled off and dissolved with an acid containing an inhibitor that suppresses corrosion of base metal (steel material). Next, the average chemical composition of the coating layer was obtained by measuring the obtained acid solution by ICP emission spectrometry or ICP-MS. The results are shown in Tables 1A to 4B.

In the method for measuring the area fraction of the phases and microstructures (MgZn₂ phase, Al phase, Al-Zn phase [ternary eutectic structure of Al/MgZn₂/Zn], boride, remainder in microstructure) in the coating layer, as described above, the cross section in the thickness direction of the coating layer perpendicular to the surface of the steel material was exposed, and the metallographic structure thereof was confirmed in a visual field at a magnification of 500 to 5,000 times. Specifically, the area fraction of the phases or microstructures constituting the metallographic structure of the coating layer was determined by observing the metallographic structure in a visual field of 10000 µm² in total of plural visual fields such that the entire thickness of coating was included in the visual field. In order to confirm each phase, the composition of the phase was confirmed at pinpoint in the EDS analysis, and a phase having substantially equivalent components was read from element mapping or the like to specify the phase. A phase having almost the same composition could be discriminated by element mapping.

The borides to be measured for the area fraction of the boride in the table are AlB₂, CrB₂, TiB₂, ZrB₂, and VB₂. Depending on the average chemical composition of the coating layer, not all but some of AlB₂, CrB₂, TiB₂, ZrB₂, and VB₂ may be contained. Therefore, the area fraction of the boride is the total area ratio of all the borides detected when the cross section in the thickness direction of the coating layer is observed.

### (Evaluation of defect resistance)

In order to simulate the defect generated on the surface of the coated steel, a cut line was made in the surface of the coating layer using an automatic cross cut tester. Specifically, 11 cut lines were made in the surface of coating in parallel at a pitch of 2 mm so as to have a length of 20 mm under a maximum load condition of 400 gf of a cross cut tester (No. 551-AUTO-1, YASUDA SEIKI SEISAKUSHO, LTD.) using a blade of an NT cutter.

The coated steel having the cut line was cut at the center portion of the cut line so as to be perpendicular to the cut line and then embedded in a resin. Next, the resin was polished to prepare a sample whose cross section can be observed. The cut depth from the surface of the coating layer was measured by observing the cross section using an optical microscope.

The above steps were performed 10 times for each test example, and the defect resistance was evaluated based on the maximum cut depth. The defect resistance was evaluated as follows. "B" was defined as unacceptable, and "A", "AA", and "S" were defined as acceptable.
"B": The maximum depth of cut was 30 µm or more.
"A": The maximum depth of cut was 20 µm or more and less than 30 µm.
"AA": The maximum depth of cut was 10 µm or more and less than 20 µm.
"S": The maximum depth of cut was less than 10 µm.

### (Evaluation of corrosion resistance of defect portion)

A cut line was made in the surface of the coating layer in the same manner as in the evaluation of defect resistance. Next, the test material having the cut line was cut into 50×100 mm so as to include the cut line portion, the composite cycle test of JASO M609 was performed on the cut test material, and the red rust generation state at the cut line was confirmed. The evaluation was performed based on the number of cycles at the time when red rust having a length of 10% or more of the length of the cut line was formed. In a case where the formation of the red rust having a length of 10% or more occurs with a small number of cycles, this means that the corrosion resistance of the defect portion is low. Corrosion resistance was evaluated as follows. "B" was defined as unacceptable, and "A", "AA", "AAA", and "S" were defined as acceptable.
"B": Generation of red rust was observed in less than 150 cycles:
"A": Red rust was generated in 150 cycles:
"AA": Red rust was generated in 210 cycles:
"AAA": Red rust was generated in 270 cycles:
"S": Red rust was not generated in 270 cycles:

As shown in Tables 1A to 5B, in Comparative Example 1, the Al content and the Mg content were insufficient, and the B content was 0%. Further, no boride was contained in the coating layer, and the area fraction of the MgZn₂ phase was reduced. As a result, the defect resistance and the corrosion resistance of the defect portion were reduced.

In Comparative Example 2, the Al content and the Mg content were insufficient, and the B content was 0%. Further, no boride was contained in the coating layer, and the area fraction of the MgZn₂ phase was reduced. As a result, the defect resistance and the corrosion resistance of the defect portion were reduced.

**In** Comparative Example 3, the B content was insufficient. In addition, the manufacturing conditions were out of the preferable range. Further, the area fraction of the boride in the coating layer was insufficient. As a result, the defect resistance and the corrosion resistance of the defect portion were reduced.

**In** Comparative Example 26, the Mg content was insufficient. Further, the area fraction of the MgZn₂ phase decreased. As a result, the defect resistance and the corrosion resistance of the defect portion were reduced.

In Comparative Example 29, the Sn content was excessively large. As a result, the corrosion resistance of the defect portion was reduced.

In Comparative Example 31, the B content and the Bi content were out of the scope of the present invention. Further, the area fraction of the boride in the coating layer was insufficient. As a result, the defect resistance and the corrosion resistance of the defect portion were reduced.

In Comparative Example 32, the B content was out of the scope of the present invention. Further, the area fraction of the boride in the coating layer was insufficient. As a result, the defect resistance and the corrosion resistance of the defect portion were reduced.

In Comparative Example 34, the In content was out of the scope of the present invention. In addition, the manufacturing conditions were out of the preferable range. In addition, the total area ratio of the Al phase and the Al-Zn phase was out of the scope of the present invention. As a result, the defect resistance and the corrosion resistance of the defect portion were reduced.

In Comparative Example 38, the La content and the Ce content were out of the scope of the present invention. In addition, the manufacturing conditions were out of the preferable range. As a result, the corrosion resistance of the defect portion was reduced.

In Comparative Examples 41 and 42, since the B content was excessive, a large amount of dross was generated in the molten metal bath, and the external appearance of the coating layer was significantly deteriorated. For this reason, it was difficult to use for various applications in industrial use.

In Comparative Example 46, the B content and the P content were out of the scope of the present invention. Further, the area fraction of the boride in the coating layer was insufficient. As a result, the defect resistance and the corrosion resistance of the defect portion were reduced.

In Comparative Example 49, the Ca content was out of the scope of the present invention. In addition, the manufacturing conditions were out of the preferable range. In addition, the area fraction of the Al phase and the Al-Zn phase was out of the scope of the present invention. As a result, the defect resistance and the corrosion resistance of the defect portion were reduced.

In Comparative Example 50, the Mg content and the B content were out of the scope of the present invention. In addition, the manufacturing conditions were out of the preferable range. Further, the area fraction of the boride in the coating layer was insufficient. Furthermore, the area fraction of MgZn₂ was excessive, and the area fraction of [ternary eutectic structure of Al/MgZn₂/Zn] was 0%. As a result, the defect resistance and the corrosion resistance of the defect portion were reduced.

In Comparative Example 51, the manufacturing conditions were out of the preferable range. In addition, the total area ratio of the Al phase and the Al-Zn phase was out of the scope of the present invention. As a result, the defect resistance and the corrosion resistance of the defect portion were reduced.

In Comparative Example 52, the Al content was out of the scope of the present invention. In addition, the area fraction of MgZn₂ was insufficient, and the total area ratio of the Al phase and the Al-Zn phase was out of the scope of the present invention. As a result, the defect resistance and the corrosion resistance of the defect portion were reduced.

**[Table 1A]**

| No. | Classification | Bath temperature (°C) | Manufacturing method/classification | Average chemical composition of coating layer (mass%) remainder: impurities | | | | | | | |
|---|---|---|---|---|---|---|---|---|---|---|---|
| | | | | Main element | | | | Element group A | | | |
| | | | | Zn | Al | Mg | B | Cr | Ti | V | Zr |
| 1 | Comparative Example | 500 | A | 93.69 | 4.0 | 2.0 | 0 | 0 | 0 | 0 | 0 |
| 2 | Comparative Example | 500 | A | 91.20 | 5.0 | 3.5 | 0 | 0 | 0 | 0 | 0 |
| 3 | Comparative Example | 500 | B | 87.50 | 6.0 | 6.0 | 0.01 | 0 | 0 | 0 | 0 |
| 4 | Example | 500 | A | 87.16 | 6.0 | 6.0 | 0.02 | 0 | 0 | 0 | 0 |
| 5 | Example | 500 | E | 83.30 | 6.0 | 10.0 | 0.05 | 0 | 0 | 0.10 | 0 |
| 6 | Example | 500 | A | 84.75 | 8.0 | 6.0 | 0.05 | 0.10 | 0.10 | 0 | 0.10 |
| 7 | Example | 500 | A | 81.47 | 8.0 | 8.0 | 0.02 | 0.20 | 0.20 | 0 | 0.20 |
| 8 | Example | 500 | E | 83.05 | 10.0 | 5.0 | 0.10 | 0 | 0 | 0 | 0 |
| 9 | Example | 500 | A | 80.50 | 10.0 | 8.0 | 0.05 | 0 | 0 | 0 | 0 |
| 10 | Example | 500 | A | 80.25 | 10.0 | 8.0 | 0.30 | 0 | 0 | 0 | 0 |
| 11 | Example | 500 | A | 80.14 | 10.0 | 8.0 | 0.40 | 0.01 | 0 | 0 | 0 |
| 12 | Example | 500 | A | 77.35 | 10.0 | 10.0 | 0.60 | 0 | 0 | 0 | 0 |
| 13 | Example | 500 | A | 77.00 | 12.5 | 8.0 | 1.00 | 0 | 0 | 0 | 0 |
| 14 | Example | 500 | E | 77.38 | 12.5 | 9.0 | 0.02 | 0 | 0.10 | 0 | 0 |
| 15 | Example | 500 | A | 76.40 | 12.5 | 9.5 | 0.10 | 0 | 0 | 0 | 0 |
| 16 | Example | 500 | A | 76.80 | 12.5 | 9.5 | 0.10 | 0 | 0 | 0.10 | 0 |
| 17 | Example | 500 | A | 76.80 | 12.5 | 9.5 | 0.10 | 0 | 0 | 0 | 0.10 |
| 18 | Example | 500 | A | 76.90 | 12.5 | 9.5 | 0.10 | 0 | 0 | 0 | 0 |
| 19 | Example | 550 | A | 75.24 | 12.5 | 10.0 | 0.10 | 0 | 0 | 0 | 0 |
| 20 | Example | 550 | A | 73.80 | 15.0 | 9.0 | 0.10 | 0.20 | 0 | 0.10 | 0 |
| 21 | Example | 550 | E | 72.50 | 15.0 | 11.0 | 0.10 | 0 | 0 | 0 | 0 |
| 22 | Example | 550 | E | 70.85 | 15.0 | 12.0 | 0.05 | 0 | 0 | 0 | 0 |
| 23 | Example | 550 | A | 70.60 | 15.0 | 11.5 | 0.20 | 0 | 0 | 0 | 0 |
| 24 | Example | 550 | E | 66.99 | 15.0 | 12.3 | 0.05 | 0 | 0 | 0.01 | 0 |
| 25 | Example | 550 | A | 72.70 | 15.0 | 9.0 | 0.05 | 0 | 0 | 0.05 | 0 |
| 26 | Comparative Example | 500 | A | 81.35 | 15.0 | 3.0 | 0.05 | 0 | 0 | 0 | 0 |

| | | | | | | | | | | | |
|---|---|---|---|---|---|---|---|---|---|---|---|
| Each underline indicates that the value is out of the scope of the present invention or the manufacturing conditions are out of the preferable range. | | | | | | | | | | | |

**[Table 1B]**

| No. | Classification | Bath temperature (°C) | Manufacturing method/classification | Average chemical composition of coating layer (mass%) remainder: impurities | | | | | | | |
|---|---|---|---|---|---|---|---|---|---|---|---|
| | | | | Main element | | | | Element group A | | | |
| | | | | Zn | Al | Mg | B | Cr | Ti | v | Zr |
| 27 | Example | 500 | A | 76.33 | 15.0 | 6.5 | 0.05 | 0 | 0 | 0 | 0 |
| 28 | Example | 550 | E | 68.99 | 18.0 | 9.0 | 0.30 | 0 | 0.1 | 0 | 0.01 |
| 29 | Comparative Example | 550 | A | 67.05 | 18.0 | 10.0 | 0.30 | 0 | 0 | 0 | 0 |
| 30 | Example | 500 | A | 73.55 | 18.0 | 6.0 | 0.30 | 0 | 0 | 0.20 | 0 |
| 31 | Comparative Example | 500 | A | 74.14 | 18.0 | 6.0 | 0.01 | 0 | 0 | 0 | 0 |
| 32 | Comparative Example | 500 | A | 75.34 | 18.0 | 6.0 | 0.01 | 0 | 0 | 0 | 0 |
| 33 | Example | 500 | A | 73.78 | 18.0 | 6.5 | 0.05 | 0 | 0 | 0.20 | 0 |
| 34 | Comparative Example | 500 | C | 73.60 | 18.0 | 6.5 | 0.05 | 0 | 0 | 0 | 0 |
| 35 | Example | 500 | A | 72.25 | 20.0 | 6.5 | 0.30 | 0 | 0.05 | 0 | 0 |
| 36 | Example | 550 | A | 64.85 | 20.0 | 12.0 | 0.30 | 0.05 | 0 | 0 | 0 |
| 37 | Example | 550 | E | 63.80 | 20.0 | 12.0 | 0.50 | 0 | 0 | 0 | 0 |
| 38 | Comparative Example | 550 | B | 66.08 | 20.0 | 12.0 | 0.02 | 0 | 0 | 0 | 0 |
| 39 | Example | 550 | A | 69.25 | 20.0 | 9.0 | 0.75 | 0 | 0 | 0 | 0 |
| 40 | Example | 550 | A | 68.55 | 20.0 | 9.0 | 0.75 | 0.20 | 0.20 | 0 | 0 |
| 41 | Comparative Example | 550 | A | 68.45 | 20.0 | 9.0 | 1.25 | 0 | 0 | 0 | 0 |
| 42 | Comparative Example | 550 | A | 62.30 | 20.0 | 12.0 | 1.50 | 0 | 0 | 0 | 0 |
| 43 | Example | 500 | A | 70.00 | 20.0 | 8.0 | 1.00 | 0 | 0 | 0 | 0 |
| 44 | Example | 500 | A | 71.28 | 20.0 | 8.0 | 0.02 | 0 | 0 | 0 | 0 |
| 45 | Example | 500 | A | 68.33 | 22.5 | 8.0 | 0.02 | 0 | 0 | 0 | 0 |
| 46 | Comparative Example | 500 | A | 68.14 | 22.5 | 8.0 | 0.01 | 0 | 0 | 0 | 0 |
| 47 | Example | 500 | A | 70.00 | 22.5 | 6.0 | 0.75 | 0 | 0 | 0 | 0 |
| 48 | Example | 500 | A | 62.25 | 30.0 | 6.0 | 0.40 | 0 | 0 | 0.20 | 0 |
| 49 | Comparative Example | 550 | B | 60.55 | 25.0 | 7.0 | 0.20 | 0 | 0 | 0 | 0 |
| 50 | Comparative Example | 550 | D | 60.84 | 25.0 | 13.0 | 0.01 | 0.05 | 0.05 | 0 | 0.05 |
| 51 | Comparative Example | 550 | C | 62.65 | 30.0 | 6.0 | 0.05 | 0 | 0 | 0 | 0 |
| 52 | Comparative Example | 550 | E | 53.35 | 40.0 | 4.5 | 0.10 | 0 | 0 | 0 | 0 |

| | | | | | | | | | | | |
|---|---|---|---|---|---|---|---|---|---|---|---|
| Each underline indicates that the value is out of the scope of the present invention or the manufacturing conditions are out of the preferable range. | | | | | | | | | | | |

**[Table 2A]**

| No. | Classification | Average chemical composition of coating layer (mass%) remainder: impurities | | | | | | | |
|---|---|---|---|---|---|---|---|---|---|
| | | Element group B | | | Element group C | | | | |
| | | Sn | Bi | In | Ca | Y | La | Ce | Sr |
| 1 | Comparative Example | 0 | 0 | 0 | 0 | 0 | 0 | 0 | 0 |
| 2 | Comparative Example | 0 | 0 | 0 | 0 | 0 | 0 | 0 | 0 |
| 3 | Comparative Example | 0.01 | 0.01 | 0 | 0.01 | 0 | 0 | 0 | 0 |
| 4 | Example | 0.05 | 0.05 | 0.05 | 0.10 | 0 | 0 | 0 | 0 |
| 5 | Example | 0.05 | 0 | 0.05 | 0.10 | 0 | 0 | 0 | 0 |
| 6 | Example | 0.10 | 0 | 0 | 0.10 | 0 | 0 | 0 | 0 |
| 7 | Example | 0.20 | 0 | 0 | 0.20 | 0 | 0 | 0 | 0 |
| 8 | Example | 0.40 | 0 | 0 | 0.40 | 0 | 0 | 0 | 0 |
| 9 | Example | 0.50 | 0 | 0 | 0.30 | 0 | 0 | 0 | 0 |
| 10 | Example | 0.50 | 0 | 0 | 0.30 | 0 | 0 | 0 | 0 |
| 11 | Example | 0.50 | 0 | 0 | 0.30 | 0 | 0 | 0 | 0 |
| 12 | Example | 0.50 | 0 | 0 | 0.30 | 0 | 0 | 0 | 0 |
| 13 | Example | 0.50 | 0 | 0 | 0.30 | 0 | 0 | 0 | 0 |
| 14 | Example | 0 | 0 | 0 | 0.50 | 0 | 0 | 0 | 0 |
| 15 | Example | 0 | 0 | 0 | 0.20 | 0 | 0 | 0 | 0 |
| 16 | Example | 0 | 0 | 0 | 0.20 | 0 | 0 | 0 | 0 |
| 17 | Example | 0 | 0 | 0 | 0.20 | 0 | 0 | 0 | 0 |
| 18 | Example | 0 | 0 | 0 | 0.20 | 0 | 0 | 0 | 0 |
| 19 | Example | 0 | 0 | 0 | 0.60 | 0 | 0 | 0 | 0 |
| 20 | Example | 0.50 | 0 | 0 | 0.20 | 0 | 0 | 0 | 0 |
| 21 | Example | 0.10 | 0 | 0 | 0.30 | 0 | 0 | 0 | 0 |
| 22 | Example | 0 | 0 | 0 | 1.00 | 0 | 0 | 0 | 0 |
| 23 | Example | 0 | 0 | 0 | 1.50 | 0 | 0 | 0 | 0 |
| 24 | Example | 1.00 | 0 | 0 | 1.80 | 0 | 0 | 0 | 0 |
| 25 | Example | 2.00 | 0 | 0 | 0.50 | 0 | 0 | 0 | 0 |
| 26 | Comparative Example | 0 | 0 | 0 | 0.10 | 0 | 0 | 0 | 0 |

**[Table 2B]**

| No. | Classification | Average chemical composition of coating layer (mass%) remainder: impurities | | | | | | | |
|---|---|---|---|---|---|---|---|---|---|
| | | Element group B | | | Element group C | | | | |
| | | Sn | Bi | In | Ca | Y | La | Ce | Sr |
| 27 | Example | 1.50 | 0 | 0 | 0 | 0.01 | 0 | 0 | 0 |
| 28 | Example | 2.50 | 0 | 0 | 0 | 0.20 | 0 | 0 | 0 |
| 29 | Comparative Example | 3.50 | 0 | 0 | 0.50 | 0 | 0 | 0 | 0 |
| 30 | Example | 0 | 0.80 | 0 | 0 | 0.40 | 0 | 0 | 0 |
| 31 | Comparative Example | 0 | 1.20 | 0 | 0 | 0 | 0 | 0 | 0 |
| 32 | Comparative Example | 0 | 0 | 0 | 0 | 0 | 0 | 0 | 0 |
| 33 | Example | 0 | 0 | 0.80 | 0 | 0 | 0.01 | 0.01 | 0 |
| 34 | Comparative Example | 0 | 0 | 1.20 | 0 | 0 | 0 | 0 | 0 |
| 35 | Example | 0 | 0 | 0 | 0 | 0 | 0 | 0 | 0 |
| 36 | Example | 0 | 0 | 0 | 0.20 | 0 | 0.20 | 0.20 | 0 |
| 37 | Example | 0 | 0 | 0 | 0 | 0 | 0.40 | 0.40 | 0 |
| 38 | Comparative Example | 0 | 0 | 0 | 0 | 0 | 0.60 | 0.60 | 0 |
| 39 | Example | 0 | 0 | 0 | 0 | 0 | 0 | 0 | 0.20 |
| 40 | Example | 0 | 0 | 0 | 0 | 0 | 0 | 0 | 0.40 |
| 41 | Comparative Example | 0 | 0 | 0 | 0 | 0 | 0 | 0 | 0.60 |
| 42 | Comparative Example | 0 | 0 | 0 | 0.50 | 0 | 0 | 0 | 0 |
| 43 | Example | 0 | 0 | 0 | 0.30 | 0 | 0 | 0 | 0 |
| 44 | Example | 0 | 0 | 0 | 0 | 0 | 0 | 0 | 0 |
| 45 | Example | 0 | 0 | 0 | 0 | 0 | 0 | 0 | 0 |
| 46 | Comparative Example | 0 | 0 | 0 | 0 | 0 | 0 | 0 | 0 |
| 47 | Example | 0 | 0 | 0 | 0 | 0 | 0 | 0 | 0 |
| 48 | Example | 0 | 0 | 0 | 0.20 | 0 | 0 | 0 | 0 |
| 49 | Comparative Example | 1.00 | 0 | 0 | 3.50 | 0 | 0 | 0 | 0 |
| 50 | Comparative Example | 0 | 0 | 0 | 0.10 | 0 | 0 | 0 | 0 |
| 51 | Comparative Example | 0 | 0 | 0 | 0.10 | 0 | 0 | 0 | 0 |
| 52 | Comparative Example | 0.50 | 0 | 0 | 0.20 | 0 | 0 | 0 | 0 |

| | | | | | | | | | |
|---|---|---|---|---|---|---|---|---|---|
| Each underline indicates that the value is out of the scope of the present invention. | | | | | | | | | |

**[Table 3A]**

| No. | Classification | Average chemical composition of coating layer (mass%) remainder: impurities | | | | | | | |
|---|---|---|---|---|---|---|---|---|---|
| | | Element group D | | Element group E | | | | | |
| | | Si | P | Ni | Co | Nb | Cu | Mn | Mo |
| 1 | Comparative Example | 0 | 0 | 0 | 0 | 0 | 0 | 0 | 0 |
| 2 | Comparative Example | 0 | 0 | 0 | 0 | 0 | 0 | 0 | 0 |
| 3 | Comparative Example | 0.01 | 0 | 0.1 | 0 | 0 | 0 | 0 | 0 |
| 4 | Example | 0.10 | 0 | 0.1 | 0 | 0 | 0 | 0 | 0 |
| 5 | Example | 0 | 0 | 0 | 0 | 0 | 0 | 0 | 0 |
| 6 | Example | 0.20 | 0 | 0.1 | 0 | 0 | 0 | 0 | 0 |
| 7 | Example | 0.30 | 0 | 0.8 | 0 | 0 | 0 | 0 | 0 |
| 8 | Example | 0.40 | 0 | 0.2 | 0 | 0 | 0 | 0 | 0 |
| 9 | Example | 0.20 | 0 | 0 | 0 | 0 | 0 | 0 | 0 |
| 10 | Example | 0.20 | 0 | 0 | 0 | 0 | 0 | 0 | 0 |
| 11 | Example | 0.20 | 0 | 0 | 0 | 0 | 0 | 0 | 0 |
| 12 | Example | 0.20 | 0 | 0 | 0 | 0 | 0 | 0 | 0 |
| 13 | Example | 0.20 | 0 | 0 | 0 | 0 | 0 | 0 | 0 |
| 14 | Example | 0 | 0 | 0 | 0 | 0 | 0 | 0 | 0 |
| 15 | Example | 0.50 | 0 | 0 | 0 | 0 | 0.10 | 0 | 0 |
| 16 | Example | 0.30 | 0 | 0 | 0 | 0 | 0 | 0 | 0 |
| 17 | Example | 0.30 | 0 | 0 | 0 | 0 | 0 | 0 | 0 |
| 18 | Example | 0.30 | 0 | 0 | 0 | 0 | 0 | 0 | 0 |
| 19 | Example | 0.60 | 0 | 0 | 0 | 0 | 0.35 | 0 | 0 |
| 20 | Example | 0.20 | 0 | 0 | 0 | 0 | 0 | 0 | 0 |
| 21 | Example | 0.05 | 0 | 0 | 0 | 0 | 0.05 | 0 | 0 |
| 22 | Example | 0.30 | 0 | 0 | 0.10 | 0 | 0 | 0 | 0 |
| 23 | Example | 0.50 | 0 | 0 | 0.20 | 0 | 0 | 0 | 0 |
| 24 | Example | 2.30 | 0 | 0 | 0 | 0 | 0 | 0 | 0.05 |
| 25 | Example | 0.20 | 0 | 0 | 0 | 0 | 0 | 0 | 0 |
| 26 | Comparative Example | 0 | 0 | 0 | 0 | 0 | 0 | 0 | 0 |

**[Table 3B]**

| No. | Classification | Average chemical composition of coating layer (mass%) remainder: impurities | | | | | | | |
|---|---|---|---|---|---|---|---|---|---|
| | | Element group D | | Element group E | | | | | |
| | | Si | P | Ni | Co | Nb | Cu | Mn | Mo |
| 27 | Example | 0 | 0 | 0 | 0 | 0 | 0 | 0.10 | 0 |
| 28 | Example | 0 | 0 | 0 | 0 | 0 | 0 | 0.20 | 0 |
| 29 | Comparative Example | 0 | 0 | 0 | 0 | 0 | 0 | 0 | 0 |
| 30 | Example | 0 | 0 | 0 | 0 | 0 | 0 | 0 | 0 |
| 31 | Comparative Example | 0 | 0 | 0 | 0 | 0 | 0 | 0 | 0 |
| 32 | Comparative Example | 0 | 0 | 0 | 0 | 0 | 0 | 0 | 0 |
| 33 | Example | 0 | 0 | 0 | 0 | 0 | 0 | 0 | 0 |
| 34 | Comparative Example | 0 | 0 | 0 | 0 | 0 | 0 | 0 | 0 |
| 35 | Example | 0 | 0 | 0 | 0 | 0.10 | 0 | 0 | 0 |
| 36 | Example | 1.50 | 0 | 0 | 0 | 0 | 0 | 0 | 0 |
| 37 | Example | 2.00 | 0 | 0 | 0 | 0 | 0 | 0 | 0 |
| 38 | Comparative Example | 0 | 0 | 0 | 0 | 0 | 0 | 0 | 0 |
| 39 | Example | 0 | 0 | 0 | 0 | 0.10 | 0 | 0 | 0 |
| 40 | Example | 0 | 0 | 0 | 0 | 0.20 | 0 | 0 | 0 |
| 41 | Comparative Example | 0 | 0 | 0 | 0 | 0 | 0 | 0 | 0 |
| 42 | Comparative Example | 3.00 | 0 | 0 | 0 | 0 | 0 | 0 | 0 |
| 43 | Example | 0 | 0 | 0 | 0 | 0 | 0 | 0 | 0 |
| 44 | Example | 0 | 0 | 0 | 0 | 0 | 0 | 0 | 0 |
| 45 | Example | 0 | 0.40 | 0 | 0 | 0 | 0 | 0 | 0 |
| 46 | Comparative Example | 0 | 0.60 | 0 | 0 | 0 | 0 | 0 | 0 |
| 47 | Example | 0 | 0 | 0 | 0 | 0 | 0 | 0 | 0 |
| 48 | Example | 0.20 | 0 | 0 | 0 | 0 | 0 | 0 | 0 |
| 49 | Comparative Example | 2.00 | 0 | 0 | 0 | 0 | 0 | 0 | 0 |
| 50 | Comparative Example | 0.10 | 0 | 0 | 0 | 0 | 0 | 0 | 0 |
| 51 | Comparative Example | 0.10 | 0 | 0 | 0 | 0 | 0 | 0.10 | 0 |
| 52 | Comparative Example | 0.10 | 0 | 0 | 0 | 0 | 0.05 | 0 | 0 |

| | | | | | | | | | |
|---|---|---|---|---|---|---|---|---|---|
| Each underline indicates that the value is out of the scope of the present invention. | | | | | | | | | |

**[Table 4A]**

| No. | Classification | Average chemical composition of coating layer (mass%) remainder: impurities | | | | | | | | |
|---|---|---|---|---|---|---|---|---|---|---|
| | | Element group E | | | | | | | Element group F | |
| | | Na | Ba | Li | Ag | W | K | Fe | Sb | Pb |
| I | Comparative Example | 0 | 0 | 0 | 0 | 0 | 0 | 0.30 | 0.01 | 0 |
| 2 | Comparative Example | 0 | 0 | 0 | 0 | 0 | 0 | 0.30 | 0 | 0 |
| 3 | Comparative Example | 0 | 0 | 0 | 0 | 0 | 0 | 0.35 | 0 | 0 |
| 4 | Example | 0 | 0 | 0 | 0 | 0 | 0 | 0.35 | 0.02 | 0 |
| 5 | Example | 0 | 0 | 0 | 0 | 0 | 0 | 0.35 | 0 | 0 |
| 6 | Example | 0 | 0 | 0 | 0 | 0 | 0 | 0.40 | 0 | 0 |
| 7 | Example | 0 | 0 | 0 | 0 | 0 | 0 | 0.40 | 0 | 0.01 |
| 8 | Example | 0 | 0 | 0 | 0 | 0 | 0 | 0.45 | 0 | 0 |
| 9 | Example | 0 | 0 | 0 | 0 | 0 | 0 | 0.45 | 0 | 0 |
| 10 | Example | 0 | 0 | 0 | 0 | 0 | 0 | 0.45 | 0 | 0 |
| 11 | Example | 0 | 0 | 0 | 0 | 0 | 0 | 0.45 | 0 | 0 |
| 12 | Example | 0 | 0 | 0 | 0.60 | 0 | 0 | 0.45 | 0 | 0 |
| 13 | Example | 0 | 0 | 0 | 0 | 0 | 0 | 0.50 | 0 | 0 |
| 14 | Example | 0 | 0 | 0 | 0 | 0 | 0 | 0.50 | 0 | 0 |
| 15 | Example | 0 | 0 | 0 | 0 | 0 | 0 | 0.50 | 0 | 0.20 |
| 16 | Example | 0 | 0 | 0 | 0 | 0 | 0 | 0.50 | 0 | 0 |
| 17 | Example | 0 | 0 | 0 | 0 | 0 | 0 | 0.50 | 0 | 0 |
| 18 | Example | 0 | 0 | 0 | 0 | 0 | 0 | 0.50 | 0 | 0 |
| 19 | Example | 0.01 | 0 | 0.10 | 0 | 0 | 0 | 0.50 | 0 | 0 |
| 20 | Example | 0 | 0 | 0 | 0 | 0 | 0 | 0.50 | 0.40 | 0 |
| 21 | Example | 0 | 0 | 0 | 0 | 0 | 0 | 0.50 | 0 | 0.40 |
| 22 | Example | 0 | 0 | 0 | 0 | 0 | 0 | 0.50 | 0.20 | 0 |
| 23 | Example | 0 | 0 | 0 | 0 | 0 | 0 | 0.50 | 0 | 0 |
| 24 | Example | 0 | 0 | 0 | 0 | 0 | 0 | 0.50 | 0 | 0 |
| 25 | Example | 0 | 0 | 0 | 0 | 0 | 0 | 0.50 | 0 | 0 |
| 26 | Comparative Example | 0 | 0 | 0 | 0 | 0 | 0 | 0.50 | 0 | 0 |

**[Table 4B]**

| No. | Classification | Average chemical composition of coating layer (mass%) remainder: impurities | | | | | | | | |
|---|---|---|---|---|---|---|---|---|---|---|
| | | Element group E | | | | | | | Element group F | |
| | | Na | Ba | Li | Ag | W | K | Fe | Sb | Pb |
| 27 | Example | 0 | 0 | 0 | 0 | 0 | 0.01 | 0.50 | 0 | 0 |
| 28 | Example | 0 | 0 | 0 | 0 | 0 | 0 | 0.65 | 0.05 | 0 |
| 29 | Comparative Example | 0 | 0 | 0 | 0 | 0 | 0 | 0.65 | 0 | 0 |
| 30 | Example | 0 | 0.10 | 0 | 0 | 0 | 0 | 0.65 | 0 | 0 |
| 31 | Comparative Example | 0 | 0 | 0 | 0 | 0 | 0 | 0.65 | 0 | 0 |
| 32 | Comparative Example | 0 | 0 | 0 | 0 | 0 | 0 | 0.65 | 0 | 0 |
| 33 | Example | 0 | 0 | 0 | 0 | 0 | 0 | 0.65 | 0 | 0 |
| 34 | Comparative Example | 0 | 0 | 0 | 0 | 0 | 0 | 0.65 | 0 | 0 |
| 35 | Example | 0 | 0 | 0 | 0 | 0.10 | 0 | 0.70 | 0 | 0 |
| 36 | Example | 0 | 0 | 0 | 0 | 0 | 0 | 0.70 | 0 | 0 |
| 37 | Example | 0 | 0 | 0 | 0.20 | 0 | 0 | 0.70 | 0 | 0 |
| 38 | Comparative Example | 0 | 0 | 0 | 0 | 0 | 0 | 0.70 | 0 | 0 |
| 39 | Example | 0 | 0 | 0 | 0 | 0 | 0 | 0.70 | 0 | 0 |
| 40 | Example | 0 | 0 | 0 | 0 | 0 | 0 | 0.70 | 0 | 0 |
| 41 | Comparative Example | 0 | 0 | 0 | 0 | 0 | 0 | 0.70 | 0 | 0 |
| 42 | Comparative Example | 0 | 0 | 0 | 0 | 0 | 0 | 0.70 | 0 | 0 |
| 43 | Example | 0 | 0 | 0 | 0 | 0 | 0 | 0.70 | 0 | 0 |
| 44 | Example | 0 | 0 | 0 | 0 | 0 | 0 | 0.70 | 0 | 0 |
| 45 | Example | 0 | 0 | 0 | 0 | 0 | 0 | 0.75 | 0 | 0 |
| 46 | Comparative Example | 0 | 0 | 0 | 0 | 0 | 0 | 0.75 | 0 | 0 |
| 47 | Example | 0 | 0 | 0 | 0 | 0 | 0 | 0.75 | 0 | 0 |
| 48 | Example | 0 | 0 | 0 | 0 | 0 | 0 | 0.75 | 0 | 0 |
| 49 | Comparative Example | 0 | 0 | 0 | 0 | 0 | 0 | 0.75 | 0 | 0 |
| 50 | Comparative Example | 0 | 0 | 0 | 0 | 0 | 0 | 0.75 | 0 | 0.05 |
| 51 | Comparative Example | 0 | 0 | 0 | 0 | 0 | 0 | 0.95 | 0.05 | 0 |
| 52 | Comparative Example | 0 | 0 | 0 | 0 | 0 | 0 | 1.20 | 0 | 0 |

**[Table 5A]**

| No. | Classification | Microstructure of coating layer (remainder: remainder in microstructure) | | | | | | Performance | | |
|---|---|---|---|---|---|---|---|---|---|---|
| | | Boride | Ratio of area fraction of boride (1 to 5 µm) | MgZn₂ phase | Al-containing phase | | | Ternary eutectic structure (area%) | Defect resistance | Corrosion resistance of defect portion |
| | | (area%) | (%) | (area%) | Al-Zn phase (area%) | AI phase (area%) | Total | | | |
| 1 | Comparative Example | 0 | 0 | 5 | 10 | 0 | 10 | 80 | B | B |
| 2 | Comparative Example | 0 | 0 | 5 | 15 | 0 | 15 | 75 | B | B |
| 3 | Comparative Example | 0.01 | 50 | 30 | 15 | 0 | 15 | 50 | B | B |
| 4 | Example | 0.02 | 85 | 30 | 15 | 0 | 15 | 50 | S | S |
| 5 | Example | 0.06 | 70 | 50 | 10 | 0 | 10 | 35 | AA | S |
| 6 | Example | 0.06 | 95 | 30 | 10 | 0 | 10 | 55 | S | S |
| 7 | Example | 0.02 | 95 | 40 | 10 | 0 | 10 | 45 | S | S |
| 8 | Example | 0.12 | 70 | 20 | 10 | 5 | 15 | 60 | AA | A |
| 9 | Example | 0.06 | 85 | 40 | 10 | 5 | 15 | 40 | S | S |
| 10 | Example | 0.36 | 85 | 40 | 10 | 5 | 15 | 40 | S | S |
| 11 | Example | 0.48 | 90 | 40 | 10 | 5 | 15 | 40 | S | S |
| 12 | Example | 0.72 | 85 | 50 | 10 | 5 | 15 | 30 | S | S |
| 13 | Example | 1.20 | 80 | 40 | 10 | 15 | 25 | 30 | S | s |
| 14 | Example | 0.02 | 70 | 45 | 10 | 10 | 20 | 30 | AA | AAA |
| 15 | Example | 0.12 | 85 | 50 | 10 | 10 | 20 | 25 | S | s |
| 16 | Example | 0.12 | 95 | 50 | 10 | 10 | 20 | 25 | S | s |
| 17 | Example | 0.12 | 95 | 50 | 10 | 10 | 20 | 25 | S | s |
| 18 | Example | 0.12 | 85 | 50 | 10 | 10 | 20 | 25 | S | s |
| 19 | Example | 0.12 | 85 | 50 | 10 | 10 | 20 | 25 | S | s |
| 20 | Example | 0.12 | 95 | 45 | 10 | 15 | 25 | 25 | S | s |
| 21 | Example | 0.12 | 70 | 50 | 10 | 15 | 25 | 20 | AA | s |
| 22 | Example | 0.06 | 70 | 55 | 10 | 15 | 25 | 15 | A | s |
| 23 | Example | 0.24 | 85 | 50 | 10 | 15 | 25 | 20 | s | s |
| 24 | Example | 0.06 | 70 | 55 | 10 | 15 | 25 | 15 | A | s |
| 25 | Example | 0.06 | 95 | 40 | 10 | 15 | 25 | 30 | s | s |
| 26 | Comparative Example | 0.06 | 75 | 5 | 10 | 20 | 30 | 60 | B | B |

| | | | | | | | | | | |
|---|---|---|---|---|---|---|---|---|---|---|
| Each underline indicates that the value is out of the scope of the present invention. | | | | | | | | | | |

**[Table 5B]**

| | | Classification Boride | Ratio of area fraction of boride (1 to 5 µm) | Microstructure of coating layer (remainder: remainder in microstructure) MgZn₂ phase | Performance Al-containing phase | | | Ternary eutectic structure (area%) | Defect resistance | Corrosion resistance of defect portion |
|---|---|---|---|---|---|---|---|---|---|---|
| | | (area%) | (%) | (area%) | Al-Zn phase (area%) | AI phase (area%) | Total | | | |
| 27 | Example | 0.06 | 85 | 30 | 10 | 20 | 30 | 35 | s | s |
| 28 | Example | 0.36 | 40 | 40 | 10 | 15 | 25 | 30 | s | S |
| 29 | Comparative Example | 0.36 | 75 | 50 | 10 | 15 | 25 | 20 | AA | B |
| 30 | Example | 0.36 | 90 | 30 | 10 | 25 | 35 | 30 | s | S |
| 31 | Comparative Example | 0.01 | 75 | 30 | 10 | 25 | 35 | 30 | B | B |
| 32 | Comparative Example | 0.01 | 90 | 30 | 10 | 25 | 35 | 30 | B | B |
| 33 | Example | 0.06 | 90 | 35 | 10 | 25 | 35 | 25 | s | S |
| 34 | Comparative Example | 0.06 | 75 | 30 | 30 | 20 | 50 | 15 | B | B |
| 35 | Example | 0.36 | 90 | 30 | 20 | 25 | 45 | 20 | s | S |
| 36 | Example | 0.36 | 90 | 55 | 10 | 20 | 30 | 10 | s | S |
| 37 | Example | 0.60 | 40 | 55 | 10 | 20 | 30 | 10 | AA | S |
| 38 | Comparative Example | 0.02 | 75 | 55 | 10 | 20 | 30 | 10 | A | B |
| 39 | Example | 0.90 | 80 | 40 | 15 | 25 | 40 | 15 | S | S |
| 40 | Example | 0.90 | 90 | 40 | 15 | 25 | 40 | 15 | S | S |
| 41 | Comparative Example | 1.50 | 60 | 40 | 15 | 25 | 40 | 15 | A | AAA |
| 42 | Comparative Example | 1.80 | 60 | 55 | 10 | 20 | 30 | 10 | A | AA |
| 43 | Example | 1.20 | 80 | 40 | 15 | 25 | 40 | 15 | S | S |
| 44 | Example | 0.02 | 85 | 40 | 15 | 25 | 40 | 15 | S | S |
| 45 | Example | 0.02 | 75 | 40 | 15 | 25 | 40 | 15 | A | AAA |
| 46 | Comparative Example | 0.01 | 50 | 40 | 15 | 25 | 40 | 15 | B | B |
| 47 | Example | 0.90 | 80 | 30 | 20 | 25 | 45 | 20 | S | S |
| 48 | Example | 0.48 | 90 | 25 | 15 | 30 | 45 | 25 | S | S |
| 49 | Comparative Example | 0.24 | 50 | 30 | 35 | 15 | 50 | 15 | B | B |
| 50 | Comparative Example | 0.01 | 50 | 60 | 20 | 15 | 35 | 0 | B | B |
| 51 | Comparative Example | 0.06 | 50 | 20 | 40 | 20 | 60 | 15 | B | B |
| 52 | Comparative Example | 0.12 | 50 | 5 | 10 | 50 | 60 | 30 | B | B |

| | | | | | | | | | | |
|---|---|---|---|---|---|---|---|---|---|---|
| Each underline indicates that the value is out of the scope of the present invention. | | | | | | | | | | |

### INDUSTRIAL APPLICABILITY

According to the present invention, it is possible to provide a coated steel having exceptional defect resistance and also exceptional corrosion resistance of a defect portion. Therefore, industrial applicability is high.

## Claims

1. A coated steel comprising: a steel material; and a coating layer provided on a surface of the steel material,
wherein the coating layer has an average chemical composition including, in terms of mass%,
Al: more than 5.0% to 30.0%,
Mg: more than 4.0% to 12.5%,
B: more than 0.01% to 1.00%,
Cr: 0% to 0.25%,
Ti: 0% to 0.25%,
Zr: 0% to 0.25%,
V: 0% to 0.25%,
Sn: 0% to 3.00%,
Bi: 0% to 1.00%,
In: 0% to 1.00%,
Ca: 0% to 3.00%,
Y: 0% to 0.50%,
La: 0% to 0.50%,
Ce: 0% to 0.50%,
Sr: 0% to 0.50%,
Si: 0% to 2.50%,
P: 0% to 0.50%,
Ni: 0% to 1.0%,
Co: 0% to 0.25%,
Nb: 0% to 0.25%,
Cu: 0% to 1.00%,
Mn: 0% to 0.25%,
Li: 0% to 0.50%,
Na: 0% to 0.05%,
K: 0% to 0.05%,
Ba: 0% to 0.25%,
Ag: 0% to 1.00%,
Mo: 0% to 0.25%,
W: 0% to 0.25%,
Fe: 0% to 5.00%,
Sb: 0% to 0.50%,
Pb: 0% to 0.50%, and
the remainder: more than 60.00% of Zn and impurities,
the coating layer contains, in terms of area fraction of a cross section of the coating layer in a thickness direction in a scanning electron microscope visual field, a MgZn₂ phase: 10% to less than 60%, an Al-Zn phase: 10% to less than 50%, a [ternary eutectic structure of Al/MgZn₂/Zn]: 10% or more, a boride: 0.02 to less than 3.00%, and a remainder in microstructure, and
the boride is one or two or more of AlB₂, AlB₁₂, CrB₂, TiB₂, VB₂, and ZrB₂.

2. A coated steel comprising: a steel material; and a coating layer provided on a surface of the steel material,
wherein the coating layer has an average chemical composition including, in terms of mass%,
Al: more than 5.0% to 30.0%,
Mg: more than 4.0% to 12.5%,
B: more than 0.01% to 1.00%,
Cr: 0% to 0.25%,
Ti: 0% to 0.25%,
Zr: 0% to 0.25%,
V: 0% to 0.25%,
Sn: 0% to 3.00%,
Bi: 0% to 1.00%,
In: 0% to 1.00%,
Ca: 0% to 3.00%,
Y: 0% to 0.50%,
La: 0% to 0.50%,
Ce: 0% to 0.50%,
Sr: 0% to 0.50%,
Si: 0% to 2.50%,
P: 0% to 0.50%,
Ni: 0% to 1.0%,
Co: 0% to 0.25%,
Nb: 0% to 0.25%,
Cu: 0% to 1.00%,
Mn: 0% to 0.25%,
Li: 0% to 0.50%,
Na: 0% to 0.05%,
K: 0% to 0.05%,
Ba: 0% to 0.25%,
Ag: 0% to 1.00%,
Mo: 0% to 0.25%,
W: 0% to 0.25%,
Fe: 0% to 5.00%,
Sb: 0% to 0.50%,
Pb: 0% to 0.50%, and
the remainder: more than 60.00% of Zn and impurities,
the coating layer contains, in terms of area fraction of a cross section of the coating layer in a thickness direction in a scanning electron microscope visual field, a MgZn₂ phase: 10% to less than 60%, an Al phase and an Al-Zn phase: 10% to less than 50% in total, a [ternary eutectic structure of Al/MgZn₂/Zn]: 10% or more, a boride: 0.02 to less than 3.00%, and a remainder in microstructure, and
the boride is one or two or more of AlB₂, AlB₁₂, CrB₂, TiB₂, VB₂, and ZrB₂.

3. The coated steel according to claim 1,
wherein the average chemical composition of the coating layer includes one or two or more of Ca, Y, La, Ce, and Sr: 0.01 mass% or more.

4. The coated steel according to claim 2,
wherein the average chemical composition of the coating layer includes one or two or more of Ca, Y, La, Ce, and Sr: 0.01 mass% or more.

5. The coated steel according to any one of claims 1 to 4,
wherein a ratio of an area fraction of a boride having a circle equivalent diameter of 1 to 5 µm to an area fraction of the boride in the cross section of the coating layer in the thickness direction is 80% or more.
